(19) Europäisches Patentamt
European Patent Office
Office européen des brevets

(11) EP 3 083 761 B1

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(21) Anmeldenummer: **14809406.3**

(22) Anmeldetag: **10.12.2014**

(51) Int Cl.:
***C08G 73/10*** *(2006.01)* ***C08L 79/08*** *(2006.01)*
***B01D 67/00*** *(2006.01)*

(86) Internationale Anmeldenummer:
**PCT/EP2014/077118**

(87) Internationale Veröffentlichungsnummer:
**WO 2015/091122 (25.06.2015 Gazette 2015/25)**

(54) **HOCHSELEKTIVE POLYIMIDMEMBRANEN MIT ERHÖHTER PERMEANZ AUS BLOCKCOPOLYIMIDEN**

HIGHLY SELECTIVE POLYIMIDE MEMBRANES WITH INCREASED PERMEANCE FROM BLOCK COPOLYIMIDES

MEMBRANES POLYIMIDES HAUTEMENT SÉLECTIVES DOTÉES D'UNE PERMÉANCE ACCRUE À PARTIR DE COPOLYIMIDES EN BLOC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2013 EP 13197853**

(43) Veröffentlichungstag der Anmeldung:
**26.10.2016 Patentblatt 2016/43**

(73) Patentinhaber: **Evonik Fibres GmbH**
**4861 Schörfling am Attersee (AT)**

(72) Erfinder:
- **UNGERANK, Markus**
  **4320 Perg (AT)**
- **ROEGL, Harald**
  **4702 Wallern an der Trattnach (AT)**

(74) Vertreter: **Wolf, Oliver**
**Evonik Industries AG**
**CI-IPM-PAT**
**Postcode 84/339**
**Rodenbacher Chaussee 4**
**63457 Hanau (DE)**

(56) Entgegenhaltungen:
**WO-A1-2007/009652 WO-A1-2011/009919**
**WO-A1-2012/000727**

- **M. NIWA ET AL.: J. OF APPL. POL. SCIENCE, Bd. 100, 2006, Seiten 2436-2442, XP002725720, in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 083 761 B1

## Beschreibung

Die vorliegende Erfindung betrifft neue Blockcopolyimide für die Herstellung hochselektiver integral asymmetrische Gasseparationsmembranen mit verbesserter Permeanz, Verfahren zur Herstellung der Blockcopolyimide, Membranen hergestellt aus den Blockcopolyimiden, sowie die Anwendung der Blockcopolyimide und der daraus hergestellten Membranen.

Polyimiden sind z. B. aus der WO 2011/009919, bekannt als sehr selektive Polymere in der Trennung von Gasen. Sie weisen jedoch nur eine mäßige Permeabilität auf, was die kommerzielle Anwendbarkeit vor allem in Anwendungen mit hohem Flächenbedarf einschränkt.

Es wäre daher wünschenswert die Permeabilität von Polyimidmembranen zu steigern, ohne deren bereits vorhandene positive Eigenschaften, wie hohe Temperatur-beständigkeit und hohe Selektivität, zu verlieren.

Ein Versuch zur Steigerung der Permeabilität von Polyimidmembranen war die Herstellung von statistischen Copolymeren ausgehend vom selektiven Polymer. Es hat sich jedoch gezeigt, dass dabei die Selektivität kontinuierlich und meist linear mit der Zugabe einer neuen Monomerkomponente abnimmt.

Eine andere Möglichkeit zur Erhöhung der Permeabilität eines Membranmaterials ist die Zumischung eines anderen Polymeren durch die Herstellung eines Blends. Das zugemischte Polymer wird so gewählt, dass es eine deutlich höhere Permeabilität aufweist. Dabei muss man jedoch in Kauf nehmen, dass das zugemischte Polymer in der Regel weniger selektiv ist. Ein weiterer Nachteil besteht darin, dass in den meisten Fällen Polymere in Lösung nicht homogen miteinander in einem weiten Konzentrationsbereich mischbar sind, so dass es in vielen Fällen zu einer Phasenseparation kommt. Dabei bildet sich eine Emulsion. Die Tröpfchengröße der Emulsion liegen über 1 $\mu$m und übersteigt dadurch die normale Schichtdicke der trennaktiven Schicht einer integral asymmetrischen Membran von 10 bis 50 nm, was wiederum die Selektivität reduziert. Blends sind zudem auf mischbare Systeme reduziert, was die anwenderische Freiheit drastisch einschränkt.

Auch das Einmischen von Additiven wie zum Beispiel Zeolithe oder MOFs (Metal Organic Frameworks) führte bis jetzt bei kommerziellen Membranen nicht zum Ziel, da die Korngröße der Additive meist über der Schichtdicke einer kommerziellen integral asymmetrischen Membran von 10 bis 50 nm liegt. Sind die Membranen dicker, so wird der Vorteil der intrinsisch höheren Permeabilität des gefüllten Membranmaterials wiederum durch die notwendige höhere Schichtdicke zunichte gemacht.

Ein weiterer Ansatz zur Verbesserung der Permeabilität von Polyimidmembranen wurde von M. Niwa et al., J. of Appl. Pol. Science, Vol. 100, 2436 - 2442, 2006, vorgeschlagen. Er hat ein Blockcopolyimid aus zwei fluorierten Polyimidblöcken zur Herstellung von Gasseparationsfolien verwendet. Dabei wurde festgestellt, dass die Permeabilität der Folien zwar - je nach Bocklänge - für $CO_2/CH_4$ besser war als die der entsprechenden Homopolymere, die Selektivität wurde jedoch signifikant reduziert. Integral asymmetrische Hohlfasermembranen wurden von Niwa nicht hergestellt.

Weitere Versuche zur Herstellung von Membranen aus Blockcopolyimiden finden sich in der US 2010/0313752, der US 5,202,411, der US 5,094,919, der US 5,130,017, der US 6,252,038 und der JP 6-071148. Keines der dort beschriebenen Blockcopolymere ist bislang kommerziell verwertet worden.

Blockcopolymere aus Polyimiden werden u.a. auch in der WO 2007/009652 beschrieben. Die dort beschriebenen Blockcopolymere weisen jedoch, wie auf Seite 7, 3. Absatz, der WO 2007/009652 beschrieben, immer einen unlöslichen Block B auf, d.h. die Monomere des Blocks B werden aus den Listen in der WO 2007/009652 so ausgewählt, dass der Block unlöslich wird. Die unlöslichen Blockcopolymere werden in der Wo 2007/009652 als Pulver zur Herstellung von hitze- und chemikalienbeständigen Formteilen, z. B. im Hot-Compression Molding Verfahren, eingesetzt. Membranen können aus diesen Pulvern nicht hergestellt werden, da mangels Löslichkeit der Blockcopolymere keine Gießlösung hergestellt werden kann.

Zwischen Permeabilität und Selektivität besteht wie oben angedeutet ein Zielkonflikt. Hohe Permeabilitäten gehen mit niederen Selektivitäten einher und umgekehrt. Dieser Zusammenhang wird im Robeson-Plot beschrieben. Die Kombination von Permeabilität und Selektivität wird auch als Permselektivität bezeichnet.

Aus den obigen Ausführungen wird deutlich, dass nach wie vor ein großer Bedarf an Polymeren für Gasseparations-membranen mit erhöhter Permselektivität bzw. Produktivität besteht.

Aufgabe der vorliegenden Erfindung war es somit neue Polymere bereitzustellen, die die Nachteile der Polymere des Standes der Technik nicht oder nur in verringertem Maße aufweisen.

Ferner soll ein Verfahren zu deren Herstellung bereitgestellt werden.

In einer speziellen Aufgabe soll es mit den neuen Polymeren möglich sein Gasseparationsmembranen, insbesondere integral asymmetrische und ganz besonders solche mit geringen Schichtdicken herzustellen.

Ebenfalls eine spezielle Aufgabe der vorliegenden Erfindung war es Polymere aus großtechnisch verfügbaren, kostengünstigen Monomeren herzustellen und somit auch ökonomisch vorteilhafte Membranen bereitstellen zu können.

In einer weiteren speziellen Aufgabe soll es möglich sein ein kostengünstiges Verfahren zur Herstellung der Membranen bereitzustellen.

Die erfindungsgemäßen Membranen sollen eine sehr hohe Produktivität aufweisen.

Weitere nicht explizit genannte Aufgaben ergeben sich aus dem Gesamtzusammenhang der nachfolgenden Beschreibung, Beispiele und Ansprüche.

Die Erfinder haben nun überraschend gefunden, dass es möglich ist die o.g. Aufgaben mit einem Blockcopolyimid gemäß Anspruch 1 sowie durch die Verfahren zu deren Herstellung nach den Ansprüchen 5 oder 10 zu lösen.

Es hat sich gezeigt, dass es mit dem erfindungsgemäßen Blockcopolyimid möglich ist integral asymmetrische Membranen zur Gasseparation herzustellen. Solche Membranen besitzen bevorzugt nur eine sehr dünne trennaktive Schicht, insbesondere im Bereich von 10 bis 50 nm.

Die erfindungsgemäßen Blockcopolymere bilden Domänen des zweiten Polymerblocks in der Matrix des ersten aus. Es hat sich nun überraschend gezeigt, dass die Domänengröße sehr klein eingestellt werden kann, d.h. kleiner als die Schichtdicke der trennaktiven Schicht ist. Somit wird zwar die Permeabilität einer aus den erfindungsgemäßen Blockcopolyimiden hergestellte Membran erhöht, die Selektivität jedoch bleibt erhalten. Die erfindungsgemäßen Polymere und Membranen weisen somit große Verteile gegenüber den im Stand der Technik bekannten Membranen auf, bei denen die Domänengröße - wie oben beschrieben - größer als die Schichtdicke der trennaktiven Schicht einer integral asymmetrischen Membran ist und bei denen somit die Selektivität durch die Domänenbildung deutlich abnimmt.

Ein weiterer Vorteil der erfindungsgemäßen Polymere und Membranen ist der, dass sie sehr kostengünstig hergestellt werden können. Dies liegt zum einen daran, dass großtechnisch verfügbare und preiswerte Monomere verwendet werden. Zum anderen liegt das aber auch daran, dass die Polymerblöcke derart ausgestaltet sind, dass sich ein Blockcopolyimid ergibt, welches in einem zur Herstellung von integral asymmetrischen Membranen üblicherweise verwendeten Lösungsmittel löslich ist. Es ist den Erfindern gelungen, dass die bei der Herstellung des Blockcopolyimids entstehende Polymerlösung direkt zur Herstellung der Membranen verwendet werden kann. Es muss weder ein Lösungsmittelaustausch vorgenommen werden, noch muss das erfindungsgemäße Blockcopolyimid isoliert und wieder aufgelöst werden. Somit werden mehrere Arbeitsschritte gespart.

Gegenstand der vorliegenden Erfindung sind somit Blockcopolymere nach Anspruch 1 und Verfahren zu deren Herstellung nach Anspruch 5 oder 10. Weiterhin sind Gegenstand der Erfindung Membranen hergestellt aus den erfindungsgemäßen Polymeren, insbesondere gemäß Anspruch 11, Gasseparationsanalagen umfassend die erfindungsgemäßen Membranen und Verfahren zur Separation von Gasen unter Verwendung der erfindungsgemäßen Membranen.

Die vorliegende Erfindung wird nachfolgend im Detail beschrieben.

Die Erfinder haben herausgefunden, dass wenn zwei nichtmischbare Polymere - entsprechend den Blöcken in Anspruch 1 - kovalent aneinandergehängt werden, eine Mikrophasenseparation stattfindet, durch die die o.g. Probleme gelöst werden.

Mit der vorliegenden Erfindung wird ein hochselektives Blockcopolymer umfassend, bevorzugt bestehend aus, den Blöcken (A) und (B), gemäß den nachfolgenden Formeln (Ia) und (Ib) bereitgestellt.

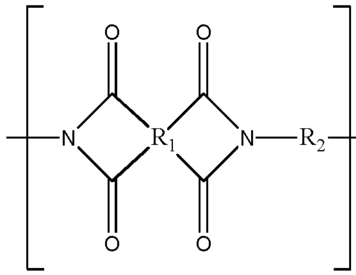

(Ia)

m

Block A

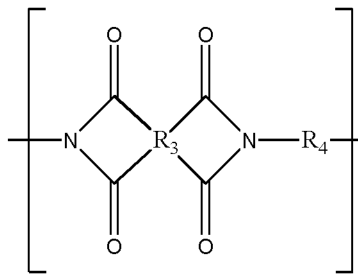

(Ib)

n

Block B

Die Blöcke A und B weisen eine unterschiedliche Zusammensetzung auf, d.h. es können nicht gleichzeitig $R_1$ und $R_3$ sowie $R_2$ und $R_4$ jeweils identisch sein.

Das Blockcopolyimid umfasst eine kontinuierliche Phase des Blocks (A). Darin umfasst die funktionale Gruppe $R_1$ mindestens eine oder beide der folgenden funktionalen Gruppen:

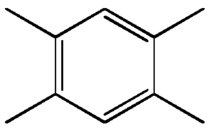
,
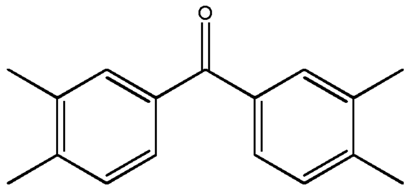

R1a R1b

Bevorzugt umfasst $R_1$ in Summe zu > 50 mol %, bevorzugt zu ≥ 70 mol %, besonders bevorzugt zu ≥ 80 mol %, ganz besonders bevorzugt zu 90 bis 100 mol%, speziell bevorzugt zu 95 bis 100 mol% und ganz speziell bevorzugt zu 100 mol% die Gruppen $R_1$a und $R_1$b, sowie ggf. weitere tetravalente aromatische funktionale Gruppen.

Besonders bevorzugt besteht $R_1$ aus 0 bis 100 mol% $R_1$a und 0 bis 100 mol% $R_1$b, ganz besonders bevorzugt aus 0 bis 80 mol% $R_1$a und 100 bis 20 mol% $R_1$b, speziell bevorzugt aus 0 bis 40 mol% $R_1$a und 100 bis 60 mol% $R_1$b und ganz speziell bevorzugt aus $0 \leq R_1a \leq 50$ mol% und $100 \geq R_1b \geq 50$ mol%, wobei die Molprozente der funktionalen Gruppen $R_1$a und $R_1$b in den genannten Bereichen jeweils so gewählt werden, dass sie in Summe 100 mol% der funktionalen Gruppen $R_1$ ergeben

$R_2$ umfasst mindestens eine oder 2 oder 3 der folgenden funktionalen Gruppen

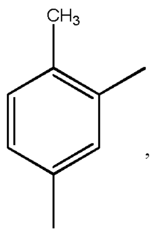
,
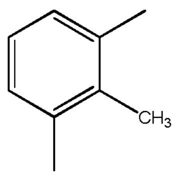
,
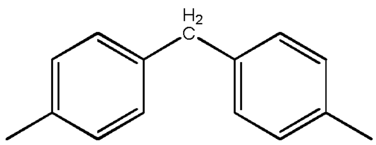

R2a R2b R2c

Bevorzugt umfasst $R_2$ in Summe zu > 50 mol % bevorzugt zu ≥ 70 mol %, besonders bevorzugt zu ≥ 80 mol %, ganz besonders bevorzugt zu 90 bis 100 mol%, speziell bevorzugt zu 95 bis 100 mol% und ganz speziell bevorzugt zu 100 mol% die Gruppen $R_2$a, $R_2$b und/oder $R_2$c und ggf. weitere divalente aromatische funktionale Gruppen, bevorzugt in Orthostellung mit einem $C_1$ - $C_4$-Alkylrest, bevorzugt $CH_4$, substituierten divalenten aromatischen Gruppen.

Besonders bevorzugt besteht $R_2$ aus 0 bis 100 mol% $R_2$a und 0 bis 100 mol% $R_2$b und 0 bis 100 mol% $R_2$c, ganz besonders bevorzugt aus 40 bis 100 mol% $R_2$a und 0 bis 60 mol% $R_2$b und 0 bis 60 mol% $R_2$c, speziell bevorzugt aus 50 bis 90 mol% $R_2$a und 10 bis 50 mol% $R_2$b und 0 bis 40 mol% $R_2$c wobei die Molprozente der funktionalen Gruppen $R_2$a, $R_2$b und $R_2$c in den genannten Bereichen jeweils so gewählt werden, dass sie in Summe 100 mol% der funktionalen Gruppen $R_2$ ergeben.

Bevorzugt sind die funktionalen Gruppen $R_2$a und $R_2$b in Summe zu 50 bis 100 mol %, besonders bevorzugt zu 60 bis 100 mol %, ganz besonders bevorzugt zu 70 bis 100 mol % und $R_2$c zu 0 bis 50 mol%, besonders bevorzugt zu 0 bis 40 mol%, und ganz besonders bevorzugt zu 0 bis 30 mol% enthalten, wobei die Molprozente der funktionalen Gruppen in den genannten Bereichen jeweils so gewählt werden, dass sie in Summe 100 mol% der funktionalen Gruppen $R_2$ ergeben.

In den am meisten bevorzugten Ausführungsformen weist Block (A) folgende Zusammensetzungen auf:

AF1: 100 mol% $R_1$b sowie 64 mol% $R_2$a, 16 mol% $R_2$b und 20 mol% $R_2$c .
AF2: 40 mol% $R_1$a, 60 mol% $R_1$b sowie 80 mol% $R_2$a, 20 mol% $R_2$b.

Die angegebenen Molprozente beziehen sich jeweils auf die funktionalen Gruppen $R_1$ und $R_2$, in Summe, so dass sich für diese Gruppen jeweils in Summe 100 mol% ergibt.

Die Vorliegende Erfindung umfasst auch Ausführungsformen in denen zwei oder mehrere unterschiedliche

Blöcke (A) vorhanden sind. Die verschiedenen (A) Blöcke können sich z.B. in der Zusammensetzung der funktionalen Gruppen unterscheiden.

Als Block (B) wird ein deutlich permeableres Polymer als Block (A) ausgesucht, das in einem aprotisch dipolaren Lösungsmittel wie vorzugsweise Dimethylformamid (DMF), Dimethylacetamid (DMAc) oder N-Methylpyrrolidinon (NMP) oder ähnlichem löslich ist und das sich nicht mit einer Lösung des Oligomers/Polymers gemäß Block (A) in dem jeweiligen Lösungsmittel mischt. Erkennbar ist die Phasenseparation an einer Trübung der Mischung der beiden Homopolymere bzw. - oligomere (A) und (B) im jeweiligen Lösungsmittel. Im Mikroskop sind Domänen einer Emulsion zu erkennen.

In Block (B) umfasst $R_3$ mindestens eine oder mehrere der folgenden funktionalen Gruppen

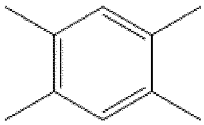
R3a
,
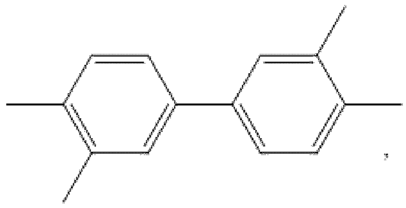
R3b
,

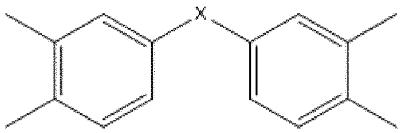
R3c

mit X= 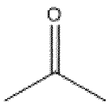 , —$SO_2$— , 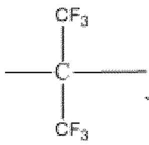 , 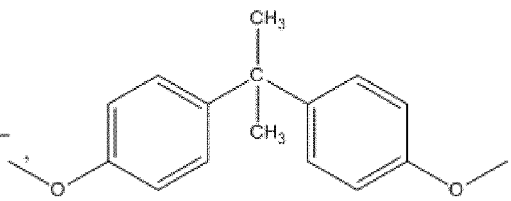 ,

—O—

Bevorzugt umfasst $R_3$ in Summe zu > 50 mol % bevorzugt zu $\geq$ 60 mol %, besonders bevorzugt zu $\geq$ 70 mol %, ganz besonders bevorzugt zu 80 bis 100 mol%, speziell bevorzugt zu 90 bis 100 mol% und ganz speziell bevorzugt zu 100 mol% die Gruppen $R_3$a, $R_3$b und/oder $R_3$c sowie ggf. weitere tetravalente aromatische funktionale Gruppen.

Besonders bevorzugt besteht $R_3$ aus 0 bis 100 mol% $R_3$a und/oder 0 bis 100 mol% $R_3$b und/oder 0 bis 100 mol% $R_3$c, ganz besonders bevorzugt aus 30 bis 100 mol% $R_3$a und/oder 0 bis 40 mol% $R_3$b und 30 bis 100 mol% $R_3$c bzw. speziell bevorzugt 0 bis 75 mol% $R_3$a und/oder 0 bis 75 mol% $R_3$b und 25 bis 100 mol% $R_3$c, ganz speziell bevorzugt aus 0 bis 60 mol% $R_3$a und 0 bis 15 mol% $R_3$b und 100 bis 25 mol% $R_3$c und insbesondere bevorzugt aus 25 bis 75 mol% $R_3$a und 75 bis 25 mol% $R_3$c, wobei die Molprozente der funktionalen Gruppen $R_3$a, $R_3$b und $R_3$c in den genannten Bereichen jeweils so gewählt werden, dass sie in Summe 100 mol% der funktionalen Gruppen $R_3$ ergeben

Besonders bevorzugte Dianhydriden zur Einführung der funktionalen Gruppe $R_3$ sind BTDA (3,3', 4,4'-Benzophenontetracarbonsäuredianhydrid), PMDA (Pyromellitsäuredianhydrid), BPDA 3,3',4,4'-Biphenyltetracarbonsäuredianhydrid), ODPA (4,4'-Oxydiphthalsäureanhydrid), BPADA (4,4'-Bisphenol A dianhydrid. CAS Nr. 38103-06-9), 6FDA (4,4'-(Hexafluoroisopropyliden)diphthalsäureanhydride).

R4 umfasst mindestens eine oder mehrere der folgenden funktionalen Gruppen

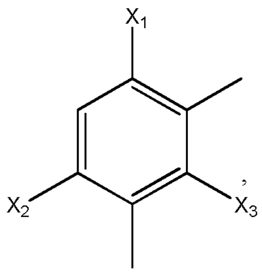
,
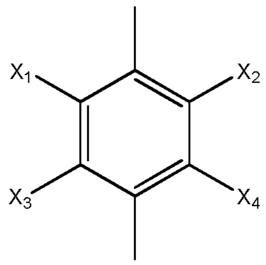
,
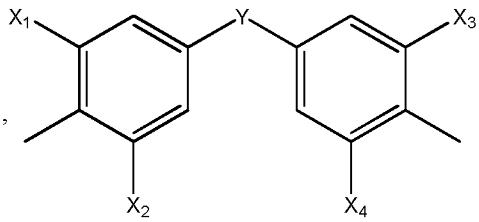

R4a R4b R4c

mit $X_1$, $X_2$, $X_3$ und $X_4$ sind entweder H oder $CH_3$ oder Alkylreste mit $C_2$ bis $C_4$
und Y = $-CH_2-$, $-(CH_3)_2C-$, $SO_2$,- $(CF_3)_2C-$, -CO-, -COO-,-CONH-,-O-

wobei mindestens einer der Reste $X_1$ bis $X_4$, bevorzugt mindestens zwei der Reste $X_1$ bis $X_4$, besonders bevorzugt mindestens drei der Reste $X_1$ bis $X_4$ und ganz besonders bevorzugt alle Reste $X_1$ bis $X_4$ gleich $CH_3$ oder ein $C_2$ bis $C_4$ Alkylrest sind.

In $R_{4c}$ ist Y bevorzugt $-CH_2-$, $-(CH_3)_2C-$, $-(CF_3)_2C-$ oder O, besonders bevorzugt ist Y = $-CH_2-$ oder $-(CH_3)_2C-$. Ganz besonders bevorzugt hat $R_4c$ folgende Zusammensetzung: $X_1$, $X_2$ und $X_3$ = H, $X_4$= $CH_3$ oder ein $C_2$ bis $C_4$ Alkylrest und Y = $-CH_2-$ oder - $(CH_3)_2C-$ bzw. $X_1$ und $X_3$ = $CH_3$ oder ein $C_2$ bis $C_4$ Alkylrest, $X_2$ und $X_4$ = H oder $CH_3$ und Y = $-CH_2-$ oder - $(CH_3)_2C-$. Am meisten bevorzugt hat $R_4c$ folgende Zusammensetzung: $X_1$, $X_2$, $X_3$ und $X_4$ = $CH_3$ oder ein $C_2$ bis $C_4$ Alkylrest und Y = $-CH_2-$ oder $-(CH_3)_2C-$, bevorzugt $-CH_2-$. Am meisten bevorzugt sind die Reste $X_1$ bis $X_4$ in den zuvor genannten bevorzugten Ausführungsformen, dann, wenn sie ungleich H sind, gleich $CH_3$.

Bevorzugt umfasst $R_4$ in Summe zu > 50 mol % bevorzugt zu ≥ 65 mol %, besonders bevorzugt zu ≥ 80 mol %, ganz besonders bevorzugt zu 90 bis 100 mol%, speziell bevorzugt zu 95 bis 100 mol% und ganz speziell bevorzugt zu 100 mol% die Einheiten $R_4a$, $R_4b$ und/oder $R_4c$ und ggf. weitere divalente aromatische funktionale Gruppen, bevorzugt divalenten aromatischen Gruppen, die in Orthostellung mit einem $C_1$ - $C_4$-Alkylrest, bevorzugt $CH_3$, substituiert sind.

Besonders bevorzugt besteht $R_4$ aus 0 bis 100 mol% $R_4a$ und/oder 0 bis 100 mol% $R_4b$ und/oder 0 bis 100 mol% $R_4c$, wobei die Molprozente der funktionalen Gruppen $R_4a$, $R_4b$ und $R_4c$ ganz besonders bevorzugt in den genannten Bereichen jeweils so gewählt werden, dass sie in Summe 100 mol% der funktionalen Gruppen $R_4$ ergeben. Speziell bevorzugt besteht $R_4$ aus 100 mol% $R_4a$ oder 100 mol% $R_4c$. Es ist ganz speziell bevorzugt das $R_4a$ mit $X_1$, $X_2$ und $X_3$=$CH_3$ oder $R_4c$ mit $X_1$, $X_2$, $X_3$ und $X_4$=$CH_4$ bzw. $X_1$ und $X_3$ = $CH_4$ und $X_2$ und $X_4$ = H und Y = $CH_2$ in den zuvor genannten Fällen eingesetzt werden.

Neben den zuvor genannten B-Blöcken, in denen nur eine Einheit $R_4a$ oder $R_4c$ enthalten ist, sind ebenfalls solche besonders bevorzugt, in denen mindestens zwei der Einheiten $R_4a$, $R_4b$ bzw. $R_4c$ enthalten sind. Insbesondere bei $R_4b$ ist es besonders bevorzugt, dass dieses in Mischungen mit $R_4a$ und/oder $R_4c$ und nicht alleine eingesetzt wird. Speziell bevorzugt besteht $R_4$ in den Fällen, in denen mindestens zwei Einheiten $R_4a$, $R_4b$ oder $R_4c$ eingesetzt werden, zu 30 bis 99 mol%, mehr bevorzugt zu 40 bis 90 mol% und am meisten bevorzugt zu 50 bis 80 mol% aus $R_4a$, der Rest zu 100 mol% $R_4$ besteht in diesen Fällen aus $R_4b$ und/oder $R_4c$. Es ist ganz speziell bevorzugt das $R_4a$ mit $X_1$, $X_2$ und $X_3$=$CH_3$ oder $R_4c$ mit $X_1$, $X_2$, $X_3$ und $X_4$=$CH_4$ bzw. $X_1$ und $X_3$ = $CH_4$ und $X_2$ und $X_4$ = H und Y = $CH_2$ in den zuvor genannten Fällen eingesetzt werden.

Als Block (B) kommt bevorzugt ein Polymer/Oligomer mit, im Vergleich zu Block (A), hoher Permeabilität zum Einsatz. So ist es vorteilhaft sehr permeable Polyimide zu verwenden, um möglichst wenig Gaswiderstand in dieser Phase zu verursachen. Polyimide sind immer dann sehr permeabel, wenn sie ein großes freies Volumen haben. Ein großes freies Volumen ergibt sich immer durch Verwendung von aromatischen funktionalen Gruppen $R_4$, die in der Orthoposition zum Stickstoffatom eine Gruppe tragen (meist Methyl oder ein linearer oder verzweigter Alkylrest mit 2 bis 4 Kohlenstoffatomen). So wird das System löslich und die Permeabilität wird erhöht. Bevorzugte Monomere mit denen die funktionale Gruppe $R_4$ in Block (B) eingeführt werden können sind MesDA (Mesitylendiamin bzw. 1,3,5-Trimethyl-m-phenylendiamin), 1,2,4,5-Tetramethyl-p-phenylendiamin oder Bis-(3,5-Dimethyl- 4-aminophenyl)methan. Besonders bevorzugte sind R4a mit $X_1$, $X_2$ und $X_3$ = $CH_3$; R4a mit $X_1$ und $X_2$ = H und $X_3$ = $CH_3$, R4a mit $X_2$ und $X_3$ = H und $X_1$ = $CH_3$, $R_4b$ mit $X_1$, $X_2$ $X_3$ und $X_4$ = $CH_3$, und $R_4c$ mit $X_1$, $X_2$ $X_3$ und $X_4$ = $CH_3$ und Y = $CH_2$. Ganz besonders bevorzugt wird MesDA verwendet.

Als besonders bevorzugter Block (B) hat sich ein Polyimid aus BTDA/PMDA und MesDA herausgestellt. Es ist löslich in aprotisch dipolaren Lösungsmitteln, ist in Lösung nicht mischbar mit dem erfindungsgemäßen Block (A), weist eine hohe Permeabilität auf und zeigt eine ausreichende Selektivität in der Trennung von Gasen.

In einer besonders bevorzugten Ausführungsform setzt sich Block (B) wie folgt zusammen:

AF3: 40 bis 60 mol% $R_3$a, 0 bis 10 mol% $R_3$b, 60 bis 30 mol% $R_3$c sowie 90 bis 100 mol% $R_4$a, 0 bis 10 mol% $R_4$b und 0 bis 10 mol% $R_4$c .

In den am meisten bevorzugten Ausführungsformen weist Block (B) folgende Zusammensetzungen auf:

AF4: 50 mol% $R_3$a, 50 mol% $R_3$c sowie 100 mol% $R_4$a.

Die für AF3 und AF4 angegebenen Molprozente beziehen sich auf die funktionalen Gruppen $R_3$ bzw. $R_4$ in Summe, so dass die Mengen der die verschiedenen Einheiten jeweils so ausgewählt werden, dass sich für diese Gruppen jeweils in Summe 100 mol% ergibt.
Ganz besonders bevorzugt sind die Kombinationen der o.g. AF1 und/oder AF2 mit AF3 und/oder AF4. Am meisten bevorzugt sind Kombinationen von AF1 oder AF 2 mit AF 4.
Die vorliegende Erfindung umfasst auch Ausführungsformen in der zwei oder mehrere unterschiedliche Blöcke (B) vorhanden sind. Die verschiedenen (B) Blöcke können sich z.B. in der Zusammensetzung der funktionalen Gruppen unterscheiden.
Die Blocklängen n und m der Blöcke (A) und (B) liegen im Bereich von 1 bis 1000, bevorzugt 1 bis 500, besonders bevorzugt 1 bis 200, speziell bevorzugt 5 bis 150, ganz speziell bevorzugt 10 bis 100, noch mehr bevorzugt 10 bis 50 und am meisten bevorzugt 10 bis 40. Die Blocklängen der Blöcke (A) und (B) können gleich oder unterschiedlich sein. Ferner kann das erfindungsgemäße Blockcopolyimid hinsichtlich der jeweiligen Blocklängen der Blöcke (A) und (B) eine Verteilung aufweisen, d.h. nicht alle Blöcke (A) oder alle Blöcke (B) müssen gleich lang sein. So kann das Verhältnis der Blöcke (A) zu (B), wie in den erfindungsgemäßen Beispielen gezeigt, über einen weiten Bereich variiert werden. Der Block (B) kann eine Anteil von 5 bis 90 %, der Block (A) einen Anteil von 10 bis 95% im erfindungsgemäßen Blockcopolyimid haben. Besonders bevorzugt beträgt das Verhältnis A : B = 80 : 20 oder 70:30 oder 60 zu 40 oder 50:50 oder ganz besonders bevorzugt 45 zu 55.
Die Erfinder haben herausgefunden, dass die Domänengröße durch die Art der Domänen, d.h. deren Zusammensetzung, und die Blocklänge gesteuert werden kann.
Die Erfinder haben zudem gefunden, dass sich bei Erzielung eines bestimmten Molekulargewichtes Hohlfasermembranen und Flachmembranen herstellen lassen, die besonders gute mechanische Stabilitäten aufweisen, sodass sie auch in anspruchsvollen technischen Anwendungen zum Einsatz kommen können. Bei zu geringen Molekulargewichten des erfindungsgemäßen Blockcopolimides kann es dazu kommen, dass keine Filme mehr ausgebildet werden.
Das Molekulargewicht $M_n$ des erfindungsgemäßen Blockcopolyimids (bezogen auf Polystyrolstandards) liegt daher bevorzugt im Bereich von 10 000 bis 200000 g/mol, besonders bevorzugt im Bereich von 20 000 bis 150000 g/mol, ganz besonders bevorzugt im Bereich von 20 000 bis 120000 g/mol und speziell bevorzugt im Bereich von 30000 bis 100000 g/mol.
Dass Molekulargewicht $M_w$ des erfindungsgemäßen Blockcopolyimids (bezogen auf Polystyrolstandards) liegt daher bevorzugt im Bereich von 10 000 bis 500000 g/mol, besonders bevorzugt im Bereich von 50 000 bis 300000 g/mol und ganz besonders bevorzugt im Bereich von 100000 bis 200000 g/mol.
Der Polydispersitätsindex liegt bevorzugt im Bereich von 1 bis 10, besonders bevorzugt im Bereich von 1 bis 5, ganz besonders bevorzugt im Bereich von 1 bis 4, speziell bevorzugt im Bereich von 1,5 bis 3,5 und ganz speziell bevorzugt im Bereich von 1,5 bis 3. Die Polydispersität des Polymeren beeinflusst vor allem die Viskosität der Lösung, aus der die Membranen hergestellt werden. Breite Molmassenverteilungen die einen hohen Anteil höhermolekularen Polymeren haben, ergeben Gießlösungen mit hohen Viskositäten bei niedrigen Feststoffgehalten. Dies kann dazu führen, dass die Membranen nicht die gewünschten Trenneigenschaften hinsichtlich ihrer Selektivität aufweisen.
Zur kovalenten Anbindung der beiden Blöcke (A) und (B) des erfindungsgemäßen Blockcopolyimids muss zunächst ein Block mit einer reaktiven Endgruppe hergestellt werden. Da zur Herstellung von Polyimiden meist Funktionalitäten wie Dianhydride, Diamine oder Diisocyanate zum Einsatz kommen, ist es zu bevorzugen, dass diese Gruppen als Endgruppen eingesetzt werden.
In einer ersten bevorzugten Ausführungsform des erfindungsgemäßen Verfahrens wird zunächst der Polymerblock (B), welcher die höhere Permeabilität aufweist, mit einer bestimmten Blocklänge und einer entsprechenden reaktiven Endgruppe hergestellt. Aus diesem Block wird dann zusammen mit den anderen Monomeren und / oder endfunktionalisierten Oligo- bzw. Polymeren des Blocks (A) eine Lösung hergestellt aus der dann nach dem Isocyanatverfahren in situ ein lösliches Blockcopolyimid polymerisiert wird. Eine Übersicht über den ersten Teil dieses Verfahrens, d.h. die Herstellung des Blocks (B) wird im nachfolgenden Schema 1 gezeigt:

Schema 1:

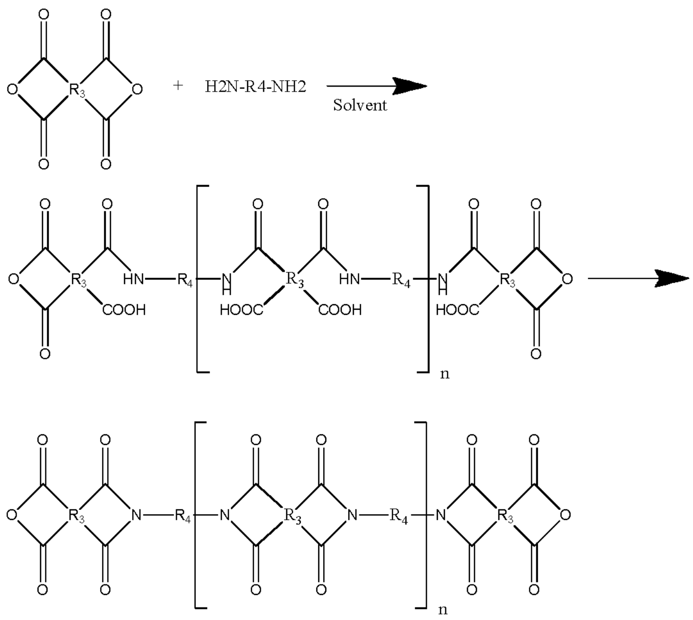


Der nachfolgende zweite Schritt von Block (B) zum erfindungsgemäßen Blockcopolyimid wird im nachfolgenden Schema 2 gezeigt:

Schema 2:

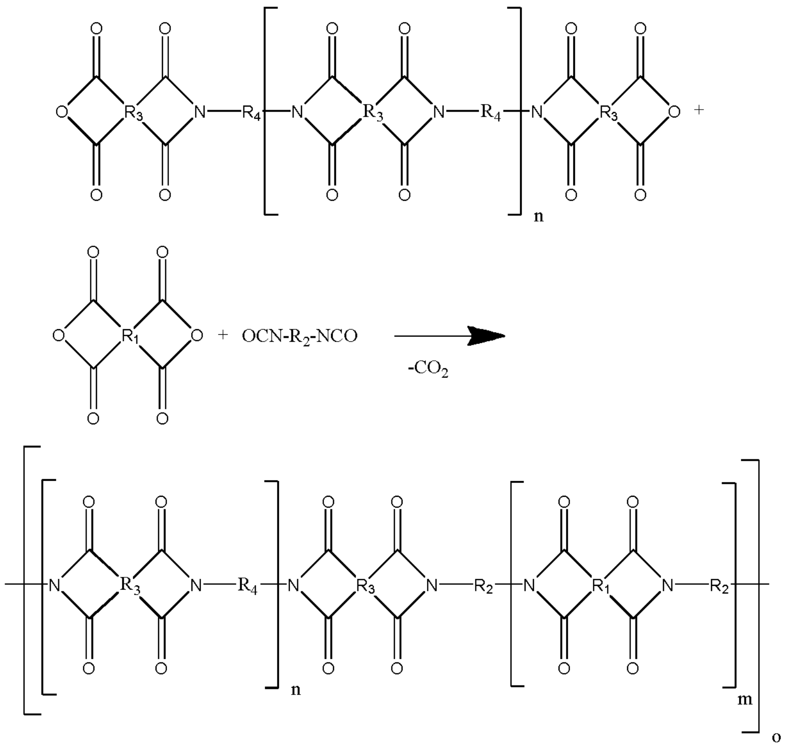


Der Bereich für den Index "o" ergibt sich aus den obigen Angaben für "m", "n" und "$M_n$".

In dieser Ausführungsform umfasst das erfindungsgemäße verfahren die folgenden Schritte:

a. Herstellung eines Oligo- bzw. Polyimids (Polymerblock (B) mit endständigen Anhydriden aus mindestens einem Dianhydrid der Formel (II)

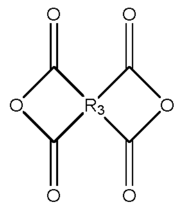 (II)

und mindestens einem Diamin der Formel (III)

$$H_2N\text{-}R_4\text{-}NH_2 \qquad (III)$$

wobei $R_3$ und $R_4$ wie oben definiert sind,

b. Umsetzung des Oligo- bzw. Polyimids aus Schritt a) mit mindestens einem Dianhydrid der Formel (IV)

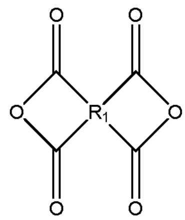 (IV)

und mindestens einem Diisocyanat (V)

$$OCN\text{-}R_2\text{-}NCO \qquad (V)$$

wobei $R_1$ und $R_2$ oben definiert sind, zu einem Blockcopolyimid, wobei in Schritt b) bevorzugt ein Katalysator verwendet wird.

Schritt a) des o.g. Verfahrens umfasst bevorzugt die nachfolgenden Teilschritte:

a1) Herstellung einer Poly- bzw. Oligoamidsäure aus mindestens einem Diamin gemäß Formel (III) und mindestens einem Dicarbonsäureanhydrid gemäß Formel (II) in einem aprotisch dipolaren Lösungsmittel, wobei das Dicarbonsäureanhydrid im molaren Überschuss vorliegt
a2) Imidisierung der Poly- bzw. Oligoamidsäure,
a3) Ausfällen des Poly- bzw. Oligoimids aus Schritt a2)
a4) Waschen, bevorzugt mit Wasser
a5) Trocknen, bevorzugt bei 30 bis 200°C, besonders bevorzugt bei 50 bis 180°C und ganz besonders bevorzugt bei 70 bis 150°C und/oder konditionieren, bevorzugt bei 200 bis 450°C, besonders bevorzugt bei 200 bis 400°C und ganz besonders bevorzugt bei 200 bis 300°C.

In Schritt a1) wird besonders bevorzugt zunächst ein Diamin (III) oder ein Gemisch von Diaminen (III) in einem aprotisch dipolaren Lösungsmittels, bevorzugt DMSO, DMF, DMAc oder NMP gelöst und durch, bevorzugt portionsweise, Zugabe eines Dianhydrids der Formel (II) oder einer Mischung von Dianhydriden der Formel (II) unter Kühlung eine Poly- bzw. Oligoamidsäure hergestellt. Die Anhydride werden im Überschuss zugegeben, dadurch erhält man ein Polymer bzw. Oligomer mit endständigen Anhydriden. Der Überschuß ist bevorzugt 0,1 bis 30 mol%, besonders bevorzugt 1 bis 10 mol% und ganz besonders bevorzugt 3 bis 8%. Durch die Menge des Überschusses an Anhydriden kann man den Polymerisationsgrad steuern und daher auch die Blocklänge in der nachfolgenden Herstellung des Blockcopolyimids. Die Blocklänge beeinflusst wie bereits erwähnt das Mikrophasenseparationsverhalten, die Phasenstruktur, die Domänenbildung und die Größe der Domänen.

Die Umsetzung erfolgt vorzugsweise bei -10 bis 80°C, ganz besonders bevorzugt bei 0 bis 30 °C, weil bei höheren Temperaturen die Polyamidsäure durch autokatalytische Wasserspaltung abgebaut wird.

In Schritt a) entsteht eine Poly- bzw. Oligoamidsäure, die noch in Schritt a2) in ein Poly- bzw. Oligoimid überführt werden muss. Hier sind die gängigen Imidisierungsverfahren aus der Literatur anzuwenden wie zum Beispiel eine thermische Imidisierung oder eine chemische Imidisierung, bevorzugt mit einer Base, besonders bevorzugt mit einer tertiären Stickstoffbase, insbesondere Pyridin oder Triethylamin, und bevorzugt einem wasserentziehenden Mittel, besonders bevorzugt Essigsäureanhydrid oder Acetylchlorid oder Thionylchlorid.

Überraschenderweise ist es gelungen, insbesondere bei einem Polymerblock (B) bestehend aus BTDA/PMDA und MesDA, ohne Zugabe einer stöchiometrischen Menge an Base zu imidisieren. Die Zugabe einer katalytischen Menge einer tertiären Base, bevorzugt von 0,1 bis 1 Mol%, bevorzugt DABCO (Diazabicyclooctan) oder DBU (Dazabicycloundecan) und einer leicht überstöchiometrischen Menge, insbesondere 5 bis 30 Mol% über der Stöchiometrie, eines wasser-entziehenden Mittels, bevorzugt Essigsäureanhydrid oder Acetylchlorid oder Thionylchlorid , ganz besonders bevorzugt Essigsäureanhydrid, führte zu einer vollständigen Imidisierung.

In Schritt a2) ist es bevorzugt nach Zugabe des wasserentziehenden Mittels zuerst noch 0,1 bis 20 h, bevorzugt 5 bis 12 h zu rühren bei -10 bis 40 °C, bevorzugt bei 20 bis 30 °C und dann bevorzugt für 0,1 bis 20 h, bevorzugt für 5 bis 12 h bei erhöhter Temperatur, bevorzugt bei 40 bis 120 °C, besonders bevorzugt bei 50 bis 90 °C weiter zu rühren um die Reaktion abzuschließen.

Die Lösung des Poly- bzw. Oligoimids wird in Schritt a3) ausgefällt. Dies erfolgt bevorzugt durch Zugabe in oder durch Zugabe von Wasser bzw. einem anderen Nichtlösungs-mittel oder Nichtlösungsmittelgemisch, bevorzugt Wasser oder einem Gemisch aus Nichtlösungsmittel und Wasser.

Das so erhaltene Pulver wird bevorzugt in Schritt a4) gewaschen, bis der Lösungsmittelgehalt kleiner gleich 1 Gew. %, bevorzugt von 0,05 bis 0,5 Gew. % beträgt.

In Schritt a5) erfolgt anschließend bevorzugt eine Trocknung und/oder Konditionierung unter den o.g. Bedingungen, um eine finale Imidisierung vorzunehmen. Die Schritte Trocknen und Konditionieren können auch in einem vorgenommen werden.

Der so erhaltene Block (B) wird in Verfahrensschritt b) dieser Ausführungsform des erfindungsgemäßen Verfahrens, bevorzugt in einem aprotisch dipolaren Lösungsmittel, besonders bevorzugt Sulfolan, Dimethylformamid, Dimethylacetamid,N-Methylpyroli-dinon, N-Ethylpyrolidinon, Dimethylpropionamid, Tertramethyl-harnstoff oder Gemischen davon, gelöst, und mit einer entsprechenden Menge an einem aromatischen Dianhydrid oder einer Mischung aus verschiedenen Dianhydriden, ausgewählt aus der Gruppe bestehend aus BTDA und PMDA, mit mindestens einem Diisocyanat, bevorzugt ausgewählt aus der Gruppe bestehend aus 2,4-TDI (2,4-Toluoldiisocyanat), 2,6-TDI (2,6-Toluoldiisocyanat) und 4,4'-MDI (4,4'-Methylendi (phenylisocyanat)), umgesetzt.

Besonders bevorzugt umfasst Schritt b) die nachfolgenden Teilschritte b1) und b2):

b1) Herstellung einer Lösung aus dem Oligoimid aus Schritt a. zusammen mit PMDA und /oder mit BTDA und mit einem basischen Katalysator in einem aprotisch dipolaren Lösungsmittel,

b2) Bildung des Blockpolymeren durch, bevorzugt kontinuierliche, Zugabe mindestens eines Diisocyanats oder einer Mischung mehrerer Diisocyanate, ausgewählt aus der Gruppe bestehend aus 2,4-TDI, 2,6-TDI und 4,4'-MDI, das Blockcopolymer gebildet wird.

Durch, bevorzugt kontinuierliche, Zugabe eines aromatischen Diisocyanats oder einer Mischung aus aromatischen Diisocyanaten, ausgewählt aus der Gruppe bestehend aus 2,4-TDI (2,4-Tolylendiisocyanat), 2,6-TDI (2,6-Tolylendiisocyanat) und 4,4'-MDI (Methylen-4,4'-diphenyldiisocyanat) in Schritt b2) wird ein lösliches Blockcopolyimid erhalten.

Die Diisocyanate zusammen mit BTDA und/oder PMDA bilden dabei den hochselektiven Anteil im Blockcopolymer. Als Katalysator für die Reaktion in Schritt b) werden bevorzugt organische Amine, besonders bevorzugt tertiäre organische Amine, ganz besonders bevorzugt DABCO oder DBU oder basische Salze, bevorzugt KOH, NaOH oder Na-Methanolat, verwendet.

Das Blockcopolyimid wird als honigartige Masse mit einem Feststoffgehalt zwischen 15 und 40 %, vorzugsweise zwischen 20 und 30% und ganz besonders vorzugsweise zwischen 25 und 28% erhalten.

Die Polymerlösung, die direkt nach der Polymerisation, d.h. nach Schritt b) erhalten wird, kann ohne Ausfällen des Polymeren direkt zu Hohlfaser- oder Flachmembranen verarbeitet werden.

Dabei kommen die gängigen Technologien zur Herstellung von Hohlfasermembranen oder Flachmembranen zum Einsatz. Es sei an dieser Stelle auf die WO 2011/009919 A1 "Polyimid-membranen aus Polymerisationslösungen" verwiesen, wo der Herstellprozess von Flachmembranen und Hohlfasermembranen beschrieben ist. Auch mit den erfindungsgemäßen Blockcopolyimiden kann nach dem beschriebenen Verfahren eine Membran hergestellt werden.

In einer zweiten bevorzugten Ausführungsform des erfindungsgemäßen Verfahrens wird zunächst der Polymerblock (A), welcher die höhere Selektivität aufweist, einer bestimmten Blocklänge und einer entsprechenden reaktiven Endgruppe hergestellt. Aus diesem Block wird dann zusammen mit den anderen Monomeren und / oder endfunktionalisierten Oligo- oder Polymeren des Blocks (B) zunächst ein Polyimid/Polyamidsäure Copolymer und daraus schließlich ein lösliches Blockcopolyimid hergestellt. Eine Übersicht über den ersten Teil dieses Verfahrens, d.h. die Herstellung des Blocks (A) wird im nachfolgenden Schema 3 gezeigt:

Schema 3:

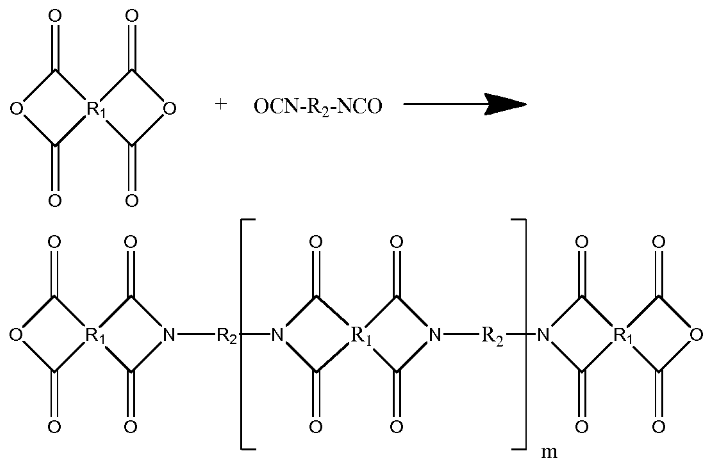

In Schema 4 wird schließlich die Herstellung des erfindungsgemäßen Blockcopolyimids aus dem nach Schema 3 erhaltenen Block (A) durch Umsetzung mit mindestens einem Dianhydrid (II) und mindestens einem Diamin (III) gezeigt:

Schema 4:

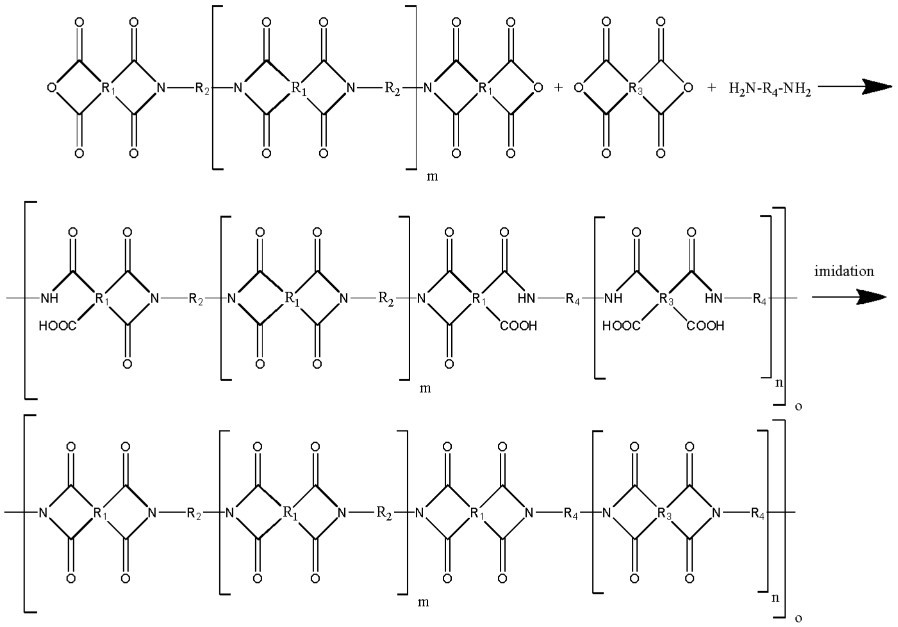


Der Bereich für den Index "o" ergibt sich aus den obigen Angaben für "m", "n" und "$M_n$".

In Schema 5 wird die Herstellung des erfindungsgemäßen Blockcopoly-imids aus dem nach Schema 3 erhaltenen Block (A) durch Umsetzung mit einem zuvor hergestellten Oligo- oder Polymeren des Blocks (B):

Schema 5:

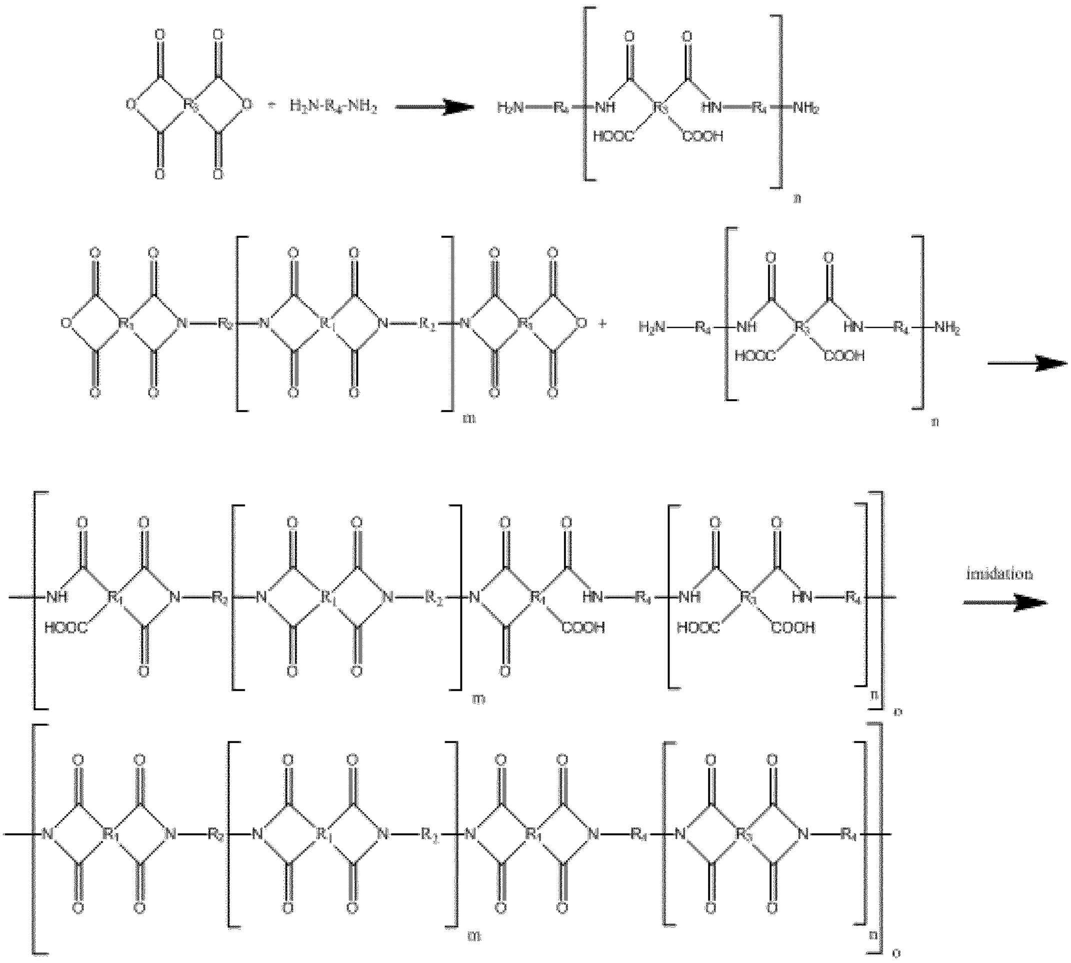


Der Bereich für den Index "o" ergibt sich aus den obigen Angaben für "m", "n" und "$M_n$"

In dieser zweiten bevorzugten Ausführungsform umfasst das erfindungsgemäße Verfahren somit die nachfolgenden Schritte:

(i) Herstellung eins Oligo- bzw. Polyimid Blocks (A) mit endständigen Anhydriden aus mindestens einem Dianhydrid der Formel (IV)

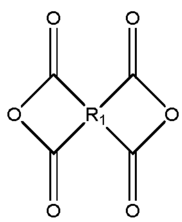
(IV)

und mindestens einem Diisocyanat der Formel (V)

$$CN\text{-}R_2\text{-}NCO \qquad (V)$$

wobei $R_1$ und $R_2$ wie oben beschrieben definiert sind,

(ii) Herstellung eines Polyimid/Polyamidsäure Blockcopolymers durch Umsetzung des aus dem nach Schritt (i) erhaltenen Blocks (A) mit mindestens einem Dianhydrid der Formel (II)

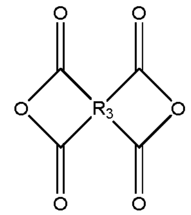

(II)

wobei $R_3$ wie oben beschrieben definiert ist
und mindestens einem Diamin der Formel (III)

$H_2N-R_4-NH_2$ (III),

wobei $R_4$ wie in oben definiert ist
und/oder mit einem aus mindestens einem Dianhydrid der Formel (II) und mindestens einem Diamin der Formel (III) hergestellten Block (B) mit endständigen Aminogruppen

(iii) Imidisierung, bevorzugt chemische Imidisierung, besonders bevorzugt mit Pyridin oder Acetanhydrid, des nach Schritt iii) entstandenen Polyimid/Polyamidsäure Blockcopolymers,

Bevorzugt werden die Schritte (i) und (ii) in einem aprotisch dipolaren Lösungsmittel oder Gemisch von aprotisch dipolaren Lösungsmitteln durchgeführt.

Schritt i) dieser Ausführungsform des erfindungsgemäßen Verfahrens wird bevorzugt in einem aprotisch dipolaren Lösungsmittel, besonders bevorzugt in Sulfolan, Dimethylformamid, Dimethylacetamid, N-Methylpyrolidinon, N-Ethylpyrolidinon, Dimethylpropionamid, Tertramethyl-harnstoff oder Gemischen davon durchgeführt. Dabei wird eine entsprechenden Menge an einem aromatischen Dianhydrid oder einer Mischung aus verschiedenen Dianhydriden, ausgewählt aus der Gruppe bestehend aus BTDA und PMDA, mit mindestens einem Diisocyanat, bevorzugt ausgewählt aus der Gruppe bestehend aus 2,4-TDI (2,4-Toluoldiisocyanat), 2,6-TDI (2,6-Toluoldiisocyanat) und 4,4'-MDI (4,4'-Methylendi (phenylisocyanat)), umgesetzt.

Durch, bevorzugt kontinuierliche, Zugabe eines der zuvor genannten aromatischen Diisocyanats oder einer Mischung daraus, wird in Schritt i) ein löslicher Oligo- bzw. Polyimidblock (A) erhalten. Als Katalysator für die Reaktion in Schritt i) werden bevorzugt organische Amine, besonders bevorzugt tertiäre organische Amine, ganz besonders bevorzugt DABCO oder DBU, oder basische Salze, bevorzugt KOH, NaOH oder Na-Methanolat, verwendet.

Die Reaktion wird vorzugsweise bei einer Temperatur von 60 bis 120 °C, bevorzugt 70 bis 100°C für eine Zeit von 1 bis 20 h, bevorzugt 4 bis 12 h durchgeführt

In Schritt iia) wird bevorzugt zunächst ein Diamin (III) oder ein Gemisch von Diaminen (III) in einem aprotisch dipolaren Lösungsmittels, bevorzugt DMSO, DMF, DMAc oder NMP gelöst und durch, bevorzugt portionsweise, Zugabe eines Dianhydrids der Formel (II) oder einer Mischung von Dianhydriden der Formel (II) unter Kühlung eine Poly- bzw. Oligoamidsäure hergestellt. Die Diamine werden im Überschuss zugegeben, dadurch erhält man ein Polymer bzw. Oligomer mit endständigen Anhydriden. Der Überschuß ist bevorzugt 0,1 bis 30 mol%, besonders bevorzugt 1 bis 10 mol% und ganz besonders bevorzugt 3 bis 8%. Durch die Menge des Überschusses an Diaminen kann man den Polymerisationsgrad steuern und daher auch die Blocklänge in der nachfolgenden Herstellung des Blockcopolyimids. Die Blocklänge beeinflusst wie bereits erwähnt das Mikrophasenseparationsverhalten, die Phasenstruktur, die Domänenbildung und die Größe der Domänen.

Die Einhaltung bestimmter Temperaturgrenzen in Schritt iia) und iib) hilft Nebenreaktionen wie die autokatalytische Hydrolyse der Polyamidsäure bei höheren Temperaturen, hintanzuhalten. Die Reaktion wird vorzugsweise bei einer Temperatur von -10 bis 80 °C, bevorzugt bei 0 bis 50°C und besonders bevorzugt bei 10 bis 30°C für eine Zeit von 1 bis 20 h, bevorzugt 4 bis 12 h durchgeführt.

Nach vollständiger Umsetzung der Diamine (III) mit den Dianhydriden (II) erfolgt in Schritt iib) die Umsetzung mit in Schritt i) hergestelltem Block (A). Die Reaktion wird vorzugsweise bei einer Temperatur von -10 bis 80 °C, bevorzugt bei 10 bis 50°C und besonders bevorzugt bei 10 bis 30°C für eine Zeit von 1 bis 20 h, bevorzugt 4 bis 12 h durchgeführt.

Alternativ aber ebenfalls bevorzugt wird in Schritt ii) nicht der Poly- oder Oligoimidblock (B) hergestellt, sondern der in Schritt i) erhaltene Block (A) wird direkt mit mindestens einem Diaminen (III) und mindestens einem Dianhydrid (II) zum Polyimid/Polyamidsäure Blockcopolymer umgesetzt.
Die Reaktion wird vorzugsweise bei einer Temperatur von -10 bis 80 °C, bevorzugt bei 10 bis 30°C für eine Zeit von 1 bis 20 h, bevorzugt 4 bis 12 h durchgeführt.

In Schritt ii) entsteht ein Polyimid/Polyamidsäure Blockcopolymer, das noch in Schritt iii) in ein Polyimid überführt werden muss. Hier sind die gängigen Imidisierungsverfahren aus der Literatur anzuwenden wie zum Beispiel eine

thermische Imidisierung oder eine chemische Imidisierung. Es gilt analoges, wie oben für die erste bevorzugte Ausführungsform ausgeführt.

Aus der nach Schritt iii) erhaltenen Blockcopolyimidlösung kann direkt eine Membran hergestellt werden.

In den erfindungsgemäßen Verfahren ist es möglich in den ersten Stufen a) oder i) zunächst mehrere verschiedene Blöcke (B) oder mehrere verschiedene Blöcke (A) herzustellen und diese dann als Gemisch in den nachfolgenden Schritten weiter zu erfindungsgemäßen Blockcopolymere umzusetzen, so dass am Ende Blockcopolymere erhalten werden, die mehrere unterschiedliche (A) und/oder unterschiedliche Blöcke (B) enthalten. Die Unterschiedlichen (A) und (B) Blöcke können sich z. B. in der Monomerzusammensetzung oder deren Verhältnis unterscheiden.

Die erfindungsgemäßen Blockcopolymere eignen sich besonders gut zur Herstellung von Membranen, besonders von integral asymmetrischen Membranen. Ganz besonders bevorzugt werden daraus asymmetrisch integrale Hohlfasermembran oder asymmetrisch integrale Flachmembran hergestellt.

Wie bereits erwähnt werden die Membranen besonders bevorzugt direkt aus der während der Herstellung des Blockcopolyimids nach einem der o.g. Verfahren erhaltenen Polymerlösung, d.h. ohne zwischenzeitliche Isolierung des Blockcopolyimids, z. B. als Pulver, hergestellt.

Aus den erfindungsgemäßen Membranen werden wiederum Module, bevorzugt Hohlfasermembranmodule oder Spiralwickelelemente, hergestellt.

Die erfindungsmäßen Membranen bzw. Membranmodule werden bevorzugt zur Auftrennung von Gasgemischen verwendet, insbesondere für Gemische aus $CO_2$ und $CH_4$, Wasserstoff und Kohlenmonoxid, Helium und Stickstoff, Helium und Methan, Wasserstoff und Methan, Sauerstoff und Stickstoff oder zur Entfeuchtung von Gasströmen.

Zur Auftrennung der Gasgemische werden die Membranen bzw. Module bevorzugt in entsprechenden Gasseparationsvorrichtungen eingesetzt, welche ebenfalls Gegenstand der vorliegenden Erfindung sind.

Meßmethoden:

Bestimmung des Molekulargewichts $M_w$, $M_p$ und $M_n$

Die Molmassenbestimmung erfolgt mit Hilfe einer Gelpermeationschromatografie. Die Kalibrierung erfolgt mit Polystyrolstandards. Die berichteten Molmassen sind daher als relative Molmassen zu verstehen.

Folgende Komponenten und Einstellungen wurden verwendet:

| | |
|---|---|
| HPLC | WATERS 600 Pumpe, 717 Autoinjektor, 2487 UV-Detektor |
| Vorsäule | PSS SDV Vorsäule |
| Säulen | PSS SDV 10 μm 1000, $10^5$ und $10^6$ Å |
| Laufmittel | 0.01M LiBr + 0.03M $H_3PO_4$ in DMF (sterilfiltriert, 0.45 μm) |
| Fluss | 1.0 ml/min |
| Laufzeit | 45 min |
| Druck | ~1550psi |
| Wellenlänge | 270nm (bei Verwendung des UV-Detektors) |
| Injektionsvolumen | 50μl bzw. 20μl (für Lösungen c >1g/l) |
| Standards | PS(Polystyrol)-Standards (engverteilt, 300-3·$10^6$, PSS) |

Bestimmung der Permeabilitäten

Die Gaspermeabilitäten werden für Folien in Barrer ($10^{-10}$ $cm^3 \cdot cm^{-2}.cm.s^{-1}.cmHg^{-1}$) angegeben. Die Permeanzen der Hohlfasern oder Flachmembranen für Gase werden in GPU (Gas Permeation Unit, $10^{-6}$ $cm^3 \cdot cm^{-2}. s^{-1}.cmHg^{-1}$) angegeben.

Die Messung der Permeabilitäten für Gase erfolgt nach der Druckanstiegsmethode. Hierbei wird eine Flachfolie mit einer Dicke zwischen 10 und 70 μ auf einer Seite mit einem Gas oder Gasgemisch beaufschlagt. Auf der anderen Seite, der Permeatseite herrscht zu Beginn des Versuches Vakuum (ca. $10^{-2}$ mbar). Es wird nun der Druckanstieg auf der Permeatseite über die Zeit aufgezeichnet. Die Permeabilität des Polymeren lässt sich nach folgender Formel berechnen:

$$P=\frac{V_{dead}.MW_{gas}.l}{\rho.R.T.A.\Delta p}.\frac{dp}{dt}.10^{10}$$

P ... Permeabilität in Barrer ($10^{-10}$ $cm^3$ (STP)·$cm^{-2}$.cm.$s^{-1}$.$cmHg^{-1}$)
$V_{dead}$ ... Volumen der Permeatseite in $cm^3$
$MW_{gas}$ ... Molmasse des Gases in g.$mol^{-1}$
1 ... Schichtdicke der Folie in cm
ρ .... Dichte des Gases in g.$cm^{-3}$
R ... Gaskonstante in $cm^3$.cmHg.$K^{-1}$.$mol^{-1}$
T ... Temperatur in Kelvin
A ... Fläche der Folie in $cm^2$
Δp ... Druckdifferenz zwischen Feed und Permeatseite in cmHg
dp/dt . Druckanstieg pro Zeit auf der Permeatseite in cmHg.$s^{-1}$

Wenn die Permeanz von Hohlfasern gemessen wird, so wird der Fluss (bei Standardtemperatur und -druck; STP) der Permeatseite bei konstantem Druck (atmospherisch) gemessen. Die Berechnung der Permeanz erfolgt nach folgender Formel:

$$p=\frac{Q}{A.\Delta p}.10^{6}$$

p ... Permeanz in GPU (Gas permeation units. $10^{-6}$ $cm^3$ (STP)·$cm^{-2}$.$s^{-1}$.$cmHg^{-1}$)
Q ... Fluss der Permeatseite in $cm^3$ (STP)/s
A ... Aussenfläche der Hohlfaser in $cm^2$
Δp ... Druckdifferenz zwischen Feed und Permeatseite in cmHg.

Die Selektivitäten von verschiedenen Gaspaaren sind Reingasselektivitäten. Die Selektivität zwischen zwei Gasen berechnet sich aus dem Quotient der Permeabilitäten:

$$S=\frac{P_1}{P_2}$$

S ... ideale Gasselektivität
$P_1$ ... steht bei Folien bzw. Flachmembranen für die Permeabilität und bei Hohlfasermembranen für die Permeanz des Gases 1
$P_2$ ... steht bei Folien bzw. Flachmembranen für die Permeabilität und bei Hohlfasermembranen für di Permeanz des Gases 2

Bestimmung der dynamischen Viskosität

Die dynamische Viskosität η wird durch Scherung der Polymerlösung in einem zylindrischen Spalt bei konstanter Temperatur von 25°C einmal durch Vorgabe verschiedener Drehzahlen Ω (bzw. Schergefällen y) und anschließend durch Vorgabe verschiedener Schubspannungen τ ermittelt.
Als Messgerät wird ein HAAKE RS 600 verwendet mit einer flüssigtemperierbaren Messbecheraufnahme TEF/Z28, einem zylindrischen Rotor Z25DIN53019/ISO3219 und Alu-Einwegmessbecher Z25E/D=28mm
Es wird die Schubspannung bei einem bestimmten Schergefälle vermessen. Die dynamische Viskosität berechnet sich aus folgenden Formeln und wird bei einem Schergefälle von 10 $s^{-1}$ in Pa.s angegeben.

Viskositätsfunktion

$$\frac{\tau}{\gamma} = \eta * \gamma^2$$

Schergefälle

$$\gamma = M * \Omega$$

τ Schubspannung
η Dynam. Viskosität
M Scherfaktor des Rotors: 12350 rad/s
Ω Winkelgeschwindigkeit

Bestimmung der Polydispersität (PDI)

Die Polydispersität PDI des Polymeren ist der Quotient aus dem Massenmittel $M_w$ und dem Zahlenmittel $M_n$, die man aus der Molmassenbestimmung erhält. Die Molmassen sind relative Molmassen bezogen auf Polystyrolstandards.

Bestimmung des Polymerisationsgrades m bzw. n

Der Polymerisationsgrad ist eine rein rechnerische Größe und ergibt sich aus dem molaren Verhältnis der verwendeten Monomere

Die nachfolgenden Beispiele dienen zur näheren Erläuterung und zum besseren Verständnis der vorliegenden Erfindung, schränken diese aber in keiner Weise ein.

**Beispiel 1: Herstellung eines Polymer- bzw. Oligomerblocks (B)**

**a) Herstellung der Poly- bzw. Oligoamidsäure (Polymerisationsgrad m= 20)**

In einem 250 ml Kolben mit Rückflusskühler, mechanischem Rührer und Stickstoffspülung werden 17,10 g (0,114 mol) 2,4,6-Trimethylbenzen-1,3-diamin (MesDA) in 161 g DMF gelöst. Die gelbe Lösung wird auf 10°C gekühlt und eine Mischung aus 19,32 g (0,06 mol) 3,3', 4,4'-Benzophenontetracarbonsäuredianhydrid (BTDA) und 13,08 g (0,06 mol) Pyromellitsäuredianhydrid (PMDA) wird schrittweise zu der Lösung zugegeben. Die Lösung wird anschließend auf Raumtemperatur erwärmt und für 8 h gerührt.

**b) Imidisierung der oligomeren Polyamidsäure (Polymerisationsgrad m=20)**

Zu der in Beispiel 1, Schritt a) hergestellten Lösung einer oligomeren Polyamidsäure werden eine Mischung aus 27,91 g (0,274 mol) Essigsäureanhydrid mit 28 g DMF mittels Tropftrichter langsam zugetropft. Anschließend werden 0,05 g 1,4-Diazabicyclo[2.2.2]octan (DABCO) zugesetzt. Die Lösung wird anschließend 8h bei Raumtemperatur und weitere 8 h bei 70°C gerührt.

Nach Ende der Reaktion wird das Oligoimid in Wasser gefällt. Der Niederschlag wird mit reichlich Wasser gewaschen und anschließend bei 70°C im Vakuumtrockenschrank getrocknet. Das trockene Oligoimid wird danach bei 230-260°C für 2 h konditioniert.

Die Gelpermeationschromatographie des Oligoimids ergibt eine Molekularmasse $M_n$ von 35501 g/mol, $M_w$ von 54348 g/mol, $M_p$ von 55413 g/mol und eine Polydispersität von 1,52 auf.

**Beispiele 2 und 3: Herstellung weiterer Blöcke (B) (Polymerisationsgrade m=10 bzw. m=33)**

Durch Variation der Menge an 2,4,6-Trimethylbenzene-1,3-diamin (MesDA) können Oligoimide mit unterschiedlichen Polymerisationsgraden hergestellt werden. Die Herstellung der Oligoimide erfolgt nach derselben Arbeitsvorschrift, wie in Bespiel 1 beschrieben. Die Zusammensetzung des Reaktionsgemisches und der dafür verwendeten Mengen an BTDA, PMDA, MesDA, DABCO und Essigsäureanhydrid werden in Tabelle 1 zusammengefasst.

Tabelle 1:

| Bsp. | Polymerisations-grad BPM | BTDA [g (mol)] | PMDA [g (mol)] | MesDA [g (mol)] | DMF [g] | Essigsäure-anhydrid [g (mol)] | DABCO [g] |
|---|---|---|---|---|---|---|---|
| 2 | 10 | 19,32 (0,06) | 13,08 (0,06) | 16,20 (0,108) | 158,5 | 26, 44 (0,259) | 0,04 |
| 3 | 33 | 19,32 (0,06) | 13,08 (0,06) | 17,46 (0,116) | 161,9 | 28,49 (0,279) | 0,05 |

Die Molekulargewichte der erhaltenen Oligoimide werden in Tabelle 2 zusammengefasst.

Tabelle 2:

| Bsp. | $M_n$ [g/mol] | $M_w$ [g/mol] | $M_p$ [g/mol] | Polydispersität |
|---|---|---|---|---|
| 2 | 28314 | 47802 | 49561 | 1,69 |
| 3 | 50174 | 100135 | 100452 | 2,00 |

**Beispiele 4-8: Herstellung eines Oligomerblocks durch Variation der eingesetzten Dianhydride/Diamine (B)**

Durch Variation der verwendeten Monomere, sowohl Mischungen von alternativen Dianhydriden, als auch von alternativen Diaminen (Mesitylendiamin [MesDA], 2,3,5,6-Tetramethyl-p-phenylenediamine [DurDA], 4,4'-Diamino-3,3'-diethyl-5,5'-dimethyldiphenylmethan (DDDDPM)) 4,4'-Diamino-3,3'-dimethyl-diphenylmethan (DDDPM), können neue erfindungsgemäße Oligoimide mit neuen Eigenschaften hergestellt werden. Die Herstellung der Oligoimide erfolgt nach derselben Arbeitsvorschrift, wie in Bespiel 1 beschrieben. Die Zusammensetzung des Reaktionsgemisches und der dafür verwendeten Mengen an Dianhydriden, Diaminen, DABCO und Essigsäureanhydrid werden in Tabelle 3 zusammengefasst.

Tabelle 3:

| Bsp. | BTDA (mol)] | PMDA [g (mol)] | ODPA [g (mol)] | 6-FDA [g (mol)] | MesDA [g (mol)] | DurDA [g (mol)] | DDDDPM [g (mol)] | DDDPM [g (mol)] | DMF [g] | Essigsäure-anhydrid [g (mol)] | DABCO [g] |
|---|---|---|---|---|---|---|---|---|---|---|---|
| **4** | 27,05 (0,084) | - | - | 15, 99 (0,036) | 17,10 (0,114) | - | - | | 198,67 | 27, 91 (0,274) | 0,06 |
| **5** | 11,59 (0,036) | - | 26,06 (0,084) | - | 17,10 (0,114) | - | - | | 179,56 | 27, 91 (0,274) | 0,06 |
| **6** | 6,44 (0,020) | 4,36 (0,020) | | | | | 10,37 (0,038) | | 71,50 | 9,30 (0,091) | 0,02 |
| **7** | 6,44 (0,020) | 4,36 (0,020) | | | | | | 8, 60 (0,038) | 63, 94 | 9,30 (0,091) | 0,02 |
| **8** | 13,52 (0,042) | 9,16 (0,042) | - | - | 7, 98 (0,053) | 2,18 (0,013) | 3,76 (0,013) | | 119,60 | 19,54 (0,192) | 0,03 |

Die Molekulargewichte der erhaltenen Oligoimide werden in Tabelle 4 zusammengefasst.

Tabelle 4:

| Bsp. | $M_n$ [g/mol] | $M_w$ [g/mol] | $M_p$ [g/mol] | Polydispersität |
|---|---|---|---|---|
| 4 | 40164 | 73929 | 75908 | 1,84 |
| 5 | 38810 | 78853 | 78771 | 2,03 |
| 6 | 47041 | 95282 | 84396 | 2,03 |
| 7 | 74037 | 162969 | 126439 | 2,20 |
| 8 | 44329 | 79616 | 80057 | 1,80 |

**Beispiel 9: Herstellung eines Blockcopolyimids in der Zusammensetzung Blöcke A : B = 45:55**

In einem 250 ml Kolben mit Rückflusskühler, mechanischem Rührer, Stickstoffspülung und Isocyanatdosierung werden 19,32 g (0,06 mol) 3,3',4,4'-Benzophenontetracarbonsäuredianhydrid (BTDA) und 8,72 g (0,04 mol) Pyromellitsäuredianhydrid (PMDA) vorgelegt und 212,3 g DMF zugesetzt. Das Reaktionsgemisch wird anschließend auf 80°C erwärmt. 45,40 g des Oligoimids (Block (B)) aus Beispiel 2 werden zu der Lösung zugesetzt. Anschließend werden 0,08 g DABCO zu der Lösung hinzugefügt. Zu der rot-braunen Lösung werden im Anschluss 18,44 g (0,106 mol) eines Isocyanatgemisches, bestehend aus 80% 2,4-Toluendiisocyanat und 20% 2,6-Toluendiisocyanat, binnen 8h unter $CO_2$ Entwicklung zudosiert. Die viskose Lösung wird bis zum Ende der Reaktion bei 80°C nachgerührt.

Die viskose Lösung weist eine dynamische Viskosität von 88 Pa.s auf. Die Gelpermeationschromatographie der Blockcopolyimid-Lösung zeigt ein Molekulargewicht $M_n$ von 77006 g/mol, $M_w$ von 174183 g/mol, $M_p$ von 127156 g/mol und eine Polydispersität von 2,26.

**Beispiele 10-15: Herstellung weiterer von Blockcopolyimiden mit unterschiedlicher Zusammensetzung**

Ausgehend von der in Beispiel 9 beschriebenen Arbeitsanleitung können unterschiedliche Blockcopolyimide durch Variation der Verhältnisse der Blöcke (A) und (B) dargestellt werden. Die Zusammensetzung des jeweiligen Reaktionsansatzes wird in Tabelle 5 zusammengefasst.

Tabelle 5:

| Bsp. | Verhältnis A / B | BTDA [g (mol)] | PMDA [g (mol)] | DMF [g] | Block(B) [g] | 80% 2,4-TDI + 20% 2,6-TDI [g (mol)] | DABCO [g] |
|---|---|---|---|---|---|---|---|
| 10 | 70:30 | 55,55 (0,173) | 25,07 (0,115) | 338,3 | 45,40 | 51,07 (0,294) | 0,15 |
| 11 | 65:35 | 44,11 (0,137) | 19,91 (0,091) | 333,2 | 45,40 | 40,77 (0,234) | 0,13 |
| 12 | 55:45 | 28,98 (0,090) | 13,08 (0,060) | 259,4 | 45,40 | 27,14 (0,156) | 0,10 |
| 13 | 50:50 | 23,67 (0,074) | 10,68 (0,049) | 233,5 | 45,40 | 22,36 (0,129) | 0,09 |
| 14 | 40:60 | 15,68 (0,049) | 7,08 (0,032) | 194,5 | 45,40 | 15,17 (0,087) | 0,08 |
| 15 | 25:75 | 7,70 (0,024) | 3,47 (0,016) | 155,6 | 45,40 | 7,98 (0,046) | 0,06 |

Die gewonnenen Blockcopolyimid-Lösungen wurden im Anschluss hinsichtlich des Molekulargewichts und der dynamischen Viskosität untersucht, die für die Blockcopolyimide charakteristischen Molmassen und Viskositäten werden in Tabelle 6 zusammengefasst.

Tabelle 6:

| Bsp. | $M_n$ [g/mol] | $M_w$ [g/mol] | $M_p$ [g/mol] | Polydispersität | Dynamische Viskosität [Pa.s] |
|---|---|---|---|---|---|
| **10** | 75528 | 144515 | 131806 | 1,91 | 44 |
| **11** | 53454 | 127745 | 116475 | 2,39 | 62 |
| **12** | 56070 | 108207 | 103460 | 1,93 | 22 |
| **13** | 61648 | 114833 | 107564 | 1,86 | 18 |
| **14** | 63694 | 125253 | 115509 | 1,97 | 21 |
| **15** | 47371 | 142575 | 117321 | 3,01 | 46 |

**Beispiele 16 und 17: Herstellung von Blockcopolyimiden mit unterschiedlichen Blocklängen des (B) Blocks**

Ausgehend von den Arbeitsvorschriften der Beispiele 9 bis 15 lassen sich weitere Blockcopolyimide herstellen, bei denen die Eigenschaften durch Variation der (B) Blocklänge angepasst werden können. Dafür werden die in Beispiel 2 und 3 hergestellten Oligoimide verwendet. Die Zusammensetzung der Reaktionsgemische ist in Tabelle 7 zusammengefasst.

Tabelle 7:

| Bsp. | Polymerisationsgrad m BPM | BTDA [g (mol)] | PMDA [g (mol)] | DMF [g] | Block (B) [g] | 80% 2,4-TDI + 20% 2,6-TDI [g (mol)] | DABCO [g] |
|---|---|---|---|---|---|---|---|
| **16** | 10 | 20,35 (0,063) | 9,19 (0,042) | 226,7 | 48,51 | 20,48 (0,118) | 0,09 |
| **17** | 33 | 21,09 (0,066) | 9,52 (0,044) | 230,9 | 49,43 | 19,74 (0,234) | 0,09 |

Die Polymerlösung wurde im Anschluss in Hinblick auf Ihre Molmasse und dynamische Viskosität untersucht, die charakteristischen Daten werden in Tabelle 8 zusammengefasst.

Tabelle 8:

| Bsp. | $M_n$ [g/mol] | $M_w$ [g/mol] | $M_p$ [g/mol] | Polydispersität | Dynamische Viskosität [Pa.s] |
|---|---|---|---|---|---|
| **16** | 55269 | 107337 | 105828 | 1,94 | 24 |
| **17** | 52169 | 122785 | 123479 | 2,35 | 23 |

**Beispiel 18: Herstellung eines Blockcopolyimids mit alternativem (A) Block und der Zusammensetzung A : B = 55 : 45**

In einem 250 ml Kolben mit Rückflusskühler, mechanischem Rührer, Stickstoffspülung und Isocyanatdosierung werden 24,3 g (0,075 mol) 3,3', 4,4'-Benzophenontetracarbonsäuredianhydrid (BTDA) vorgelegt und 170,0 g DMF zugesetzt. Das Reaktionsgemisch wird anschließend auf 85°C erwärmt. 25,2 g des Oligoimids aus Beispiel 1 werden zu der Lösung zugesetzt. Anschließend werden 1 g DABCO und 1,47 g Toluoldiamin zu der Lösung hinzugefügt. Zu der rot-braunen Lösung werden im Anschluss 13,53 g (0,077 mol) 2,4-Toluendiisocyanat binnen 8h unter $CO_2$ Entwicklung zudosiert. Die viskose Lösung wird bis zum Ende der Reaktion bei 85°C nachgerührt.

Die viskose Lösung weist eine dynamische Viskosität von 17 Pa.s auf. Die Gelpermeationschromatographie der Blockcopolyimid-Lösung zeigt ein Molekulargewicht $M_n$ von 59268 g/mol, $M_w$ von 138236 g/mol, $M_p$ von 124001 g/mol mit einen PDI von 2,33.

**Beispiel 19: Herstellung eines Blockcopolyimids mit alternativem (A) Block und der Zusammensetzung A : B = 52 : 48**

In einem 250 ml Kolben mit Rückflusskühler, mechanischem Rührer, Stickstoffspülung und Isocyanatdosierung

werden 24,15 g (0,075 mol) 3,3', 4,4'-Benzophenontetracarbonsäuredianhydrid (BTDA) vorgelegt und 187,7 g DMAc zugesetzt. Das Reaktionsgemisch wird anschließend auf 85°C erwärmt. 29,80 g des Oligoimids aus Beispiel 1 werden zu der Lösung zugesetzt. Anschließend werden 0,20 g DABCO hinzugefügt. Zu der rot-braunen Lösung werden im Anschluss 14,95 g (0,079 mol) eines Isocyanatgemisches, bestehend aus 80% Toluoldiisocyanat (80% 2,4-Toluendiisocyanat und 20% 2,6-Toluendiisocyanat) und 20% 4,4'-Methylen-bis(phenylisocyanat) (MDI), binnen 4,7 h unter $CO_2$ Entwicklung zudosiert. Die viskose Lösung wird bis zum Ende der Reaktion bei 85°C nachgerührt.

**Beispiele 20-24: Herstellung eines Blockcopolyimids mit alternativem (B) Block und der Zusammensetzung A : B = 45 : 55**

Ausgehend von den Arbeitsvorschriften der Beispiele 9 bis 15 lassen sich weitere Blockcopolyimide herstellen, bei denen die Eigenschaften durch Variation der Zusammensetzung des (B) Blockes angepasst werden können. Dafür werden die in Beispiel 4 bis 8 hergestellten Oligoimide verwendet. Die Zusammensetzung der Reaktionsgemische ist in Tabelle 9 zusammengefasst.

Tabelle 9:

| Bsp. | (B) Block aus Bsp | BTDA [g (mol)] | PMDA [g (mol)] | DMF [g] | Block (B) [g] | 80% 2,9-TDI + 20% 2,6-TDI [g (mol)] | DABCO [g] |
|---|---|---|---|---|---|---|---|
| **20** | 4 | 10, 67 (0,033) | 4,82 (0,022) | 116,9 | 25,0 | 10,08 (0,058) | 0,05 |
| **21** | 5 | 12,78 (0,040) | 9,52 (0,026) | 140,3 | 30,0 | 12,13 (0,070) | 0,09 |
| **22** | 6 | 6,39 (0,020) | 2,89 (0,013) | 70,1 | 15,0 | 6,02 (0,035) | 0,03 |
| **23** | 7 | 6,40 (0,020) | 2,89 (0,013) | 70,2 | 15,0 | 6,05 (0,035) | 0,03 |
| **24** | 8 | 8,51 (0,026) | 3,84 (0,018) | 93,5 | 20,0 | 8,10 (0,035) | 0,04 |

Die Polymerlösung wurde im Anschluss in Hinblick auf Ihre Molmasse untersucht, die charakteristischen Daten werden in Tabelle 10 zusammengefasst.

Tabelle 10:

| Bsp. | $M_n$ [g/mol] | $M_w$ [g/mol] | $M_p$ [g/mol] | Polydispersität |
|---|---|---|---|---|
| **20** | 51417 | 117337 | 106851 | 2,28 |
| **21** | 51276 | 110628 | 86517 | 2,16 |
| **22** | 38403 | 108133 | 45567 | 2,82 |
| **23** | 35614 | 120157 | 28816 | 3,37 |
| **24** | 57221 | 129584 | 119094 | 2,26 |

**Beispiele 25-29: Herstellung gemäß der zweiten bevorzugten Ausführungsform des erfindungsgemäßen Verfahren mit einem (A) Block mit einem Polymerisationsgrad von n=19**

**i) Herstellung des (A) Blocks (Blocklänge n=10) in Lösung:**

In einem 2L Kolben mit Rückflusskühler, mechanischem Rührer, Stickstoffspülung und Isocyanatdosierung werden 325,05 g (1,009 mol) 3,3', 4,4'-Benzophenontetracarbonsäuredianhydrid (BTDA) vorgelegt und 1229,4 g DMF zugesetzt. Das Reaktionsgemisch wird anschließend auf 90°C erwärmt. Anschließend werden 1,15 g DABCO und 0,56 g 2,4-Toluoldiamin zu der Lösung hinzugefügt. Zu der rot-braunen Lösung werden im Anschluss 157,18 g (0,908 mol) 2,4-Toluendiisocyanat binnen 200 min unter $CO_2$ Entwicklung zudosiert. Die viskose Lösung wird bis zum Ende der Reaktion bei 90°C nachgerührt. Die Lösung wird anschließend in einen 2L Maßkolben geleert und mit DMF auf 2L

verdünnt.

**ii) Herstellung des Blockcopolyimids**

In einem Kolben wird MesDA vorgelegt und mit einer definierten Menge DMF gelöst. Die Lösung wird auf rund 15°C gekühlt. Anschließend wird eine Mischung aus PMDA und BTDA in kleinen Portionen zugesetzt.

Nach vollständiger Umsetzung der Dianhydride mit MesDA wird ein definiertes Volumen der Block (A) Oligomer Lösung zu der Lösung zugetropft. Es wird mit geringer Mengen BTDA zum Erzielen hoher Viskositäten nachdosiert. Die Lösung rührt weitere 5 h bei 15°C zur Vervollständigung der Reaktion.

**iii) Imidisierung**

Im Anschluss daran wird eine Mischung aus Essigsäureanhydrid und Pyridin rasch zugetropft und eine Stunde bei Raumtemperatur nachgerührt. Die Lösung wird für weitere 12 h bei 60°C gerührt, sodass eine orange Lösung erhalten wird.

Durch Variation der Einwaagen können Blockcopolyimide mit unterschiedlichen Verhältnissen der (A) und (B) Blöcke hergestellt werden. Die eingesetzten Einwaagen werden in Tabelle 11 zusammengefasst.

Tabelle 11:

| Bsp. | Verhältnis A/B | MesDA [g (mol)] | BTDA [g (mol)] | PMDA [g (mol)] | DMF [g] | Block (A) Oligomer-Lösung [ml] | Pyridin [g] | Essigsäureanhydrid [g] |
|---|---|---|---|---|---|---|---|---|
| **25** | 40:60 | 5,85 (0,039) | 5,88 (0,018) | 3,98 (0,018) | 35 | 50 | 12, 95 | 8,36 |
| **26** | 45:55 | 5,81 (0,039) | 5,74 (0,018) | 3,89 (0,018) | 35 | 60 | 12,84 | 8,29 |
| **27** | 50:50 | 4,83 (0,032) | 4,70 (0,015) | 3,18 (0,015) | 30 | 69 | 10, 68 | 6,89 |
| **28** | 55:45 | 4,71 (0,031) | 4,48 (0,014) | 3,03 (0,014) | 30 | 70 | 10, 41 | 6,72 |
| **29** | 60:40 | 3,93 (0,026) | 3,65 (0,011) | 2,47 (0,011) | 30 | 70 | 8,69 | 5,61 |

Die Polymerlösungen wurden im Anschluss in der Gelpermeationschromatographie auf ihre Molmassen untersucht. Charakteristische Molmassen werden in Tabelle 12 zusammengefasst.

Tabelle 12:

| Bsp. | A : B wobei bei A (n=10) | $M_n$ [g/mol] | $M_w$ [g/mol] | $M_p$ [g/mol] | Polydispersität |
|---|---|---|---|---|---|
| **25** | 40:60 | 89644 | 186153 | 175438 | 2,08 |
| **26** | 45:55 | 89731 | 181403 | 172219 | 2,02 |
| **27** | 50:50 | 74543 | 143948 | 142731 | 1,93 |
| **28** | 55:45 | 85964 | 176288 | 165535 | 2,05 |
| **29** | 60:40 | 79550 | 155592 | 150242 | 1,96 |

**Beispiele 30-40: Herstellung eines Blockcopolyimid mit definierten (A) Blöcken (n=39 und n=66)**

Ausgehend von der in Beispiel 25-29 angeführter Arbeitsanleitung können durch Variation der Mengen an 2,4-Toluendiisocyanat Oligoimide (Block (A)) mit unterschiedlicher Blocklänge (n=20 bzw. n=33) und somit nach der Umsetzung mit MesDA, PMDA und BTDA weitere, neue Blockcopolyimide hergestellt werden. Die Zusammensetzung der Reaktionsgemische für die Herstellung der Oligoimide-Lösung und der Blockcopolyimid-Lösung werden in Tabelle 13 + 14 zusammengefasst.

Herstellung der (A) Block Oligoimid-Lösungen mit unterschiedlichen Blocklängen:

Tabelle 13:

| | BTDA [g (mol)] | 2,4 TDI [g (mol)] | DMF [g] | DABCO [g] | 2,9-Toluendiamin [g] |
|---|---|---|---|---|---|
| **Block A (n=20)** | 325,05 (1,009) | 166,93 (0,958) | 1229,43 | 1,15 | 0,56 |
| **Block A (n=33)** | 325,05 (1,009) | 170,44 (0,978) | 1229,43 | 1,15 | 0,34 |

Herstellung der Blockcopolyimide mit beiden (A) Blöcken und unterschiedlichen Verhältnissen A : B.

Tabelle 14:

| Bsp. | A:B | MesDA [g (mol)] | BTDA [g (mol)] | PMDA [g (mol)] | DMF [g] | Block A (n=39) Lösung [ml] | Block A (n=66) Lösung [ml] | Pyridin [g] | Essigsäureanhydrid [g] |
|---|---|---|---|---|---|---|---|---|---|
| **30** | 40:60 | 5,67 (0,038) | 5,88 (0,018) | 3,98 (0,018) | 35 | 50 | | 12,53 | 8,09 |
| **31** | 45:55 | 5,58 (0,037) | 5,74 (0,018) | 3,89 (0,018) | 35 | 60 | | 12,35 | 7, 97 |
| **32** | 50:50 | 4, 60 (0,031) | 4,70 (0,015) | 3,18 (0,015) | 30 | 69 | | 10,18 | 6,57 |
| **33** | 55:45 | 4,44 (0,030) | 4,48 (0,014) | 3,03 (0,018) | 30 | 70 | | 9,83 | 6,34 |
| **34** | 60:40 | 3,67 (0,024) | 3,65 (0,011) | 2,47 (0,014) | 30 | 70 | | 8,11 | 5,24 |
| **35** | 25:75 | 7,73 (0,052) | 8,21 (0,026) | 5,55 (0,026) | 60 | | 35 | 17,10 | 11,04 |
| **36** | 35:65 | 6,90 (0,046) | 7,27 (0,023) | 4, 92 (0,023) | 60 | | 50 | 15,25 | 9,84 |
| **37** | 45:55 | 5,49 (0,037) | 5,74 (0,018) | 3,89 (0,018) | 55 | | 60 | 12,15 | 7,84 |
| **38** | 55:45 | 4,65 (0,031) | 4,80 (0,015) | 3,25 (0,015) | 50 | | 75 | 10,28 | 6,63 |
| **39** | 65:35 | 3,11 (0,021) | 3,16 (0,001) | 2,14 (0,001) | 35 | | 75 | 6,89 | 4,45 |
| **40** | 75:25 | 2,66 (0,018) | 2,61 (0,008) | 1,77 (0,008) | 30 | | 100 | 5,88 | 3,79 |

Alle resultierenden Blockcopolyimid-Lösungen wurden hinsichtlich ihrer Molmasse untersucht. Charakteristische Molekulargewichte werden in Tabelle 15 und 16 zusammengefasst:

Tabelle 15:

| Bsp. | A : B wobei A (n=20) | $M_n$ [g/mol] | $M_w$ [g/mol] | $M_p$ [g/mol] | Polydispersität |
|---|---|---|---|---|---|
| **30** | 40:60 | 76779 | 162275 | 147753 | 2,11 |
| **31** | 45:55 | 83294 | 177832 | 159160 | 2,14 |
| **32** | 50:50 | 66720 | 125666 | 120010 | 1,88 |
| **33** | 55:45 | 72307 | 143676 | 133666 | 1,99 |
| **34** | 60:40 | 74012 | 157401 | 135920 | 2,13 |

Tabelle 16:

| Bsp. | A : B mit A (n=33) | $M_n$ [g/mol] | $M_w$ [g/mol] | $M_p$ [g/mol] | Polydispersität |
|---|---|---|---|---|---|
| **35** | 25:75 | 83468 | 234403 | 230832 | 2,81 |
| **36** | 35:65 | 81717 | 198041 | 181587 | 2,42 |
| **37** | 45:55 | 111354 | 178408 | 157482 | 1,60 |
| **38** | 55:45 | 66322 | 140685 | 131396 | 2,12 |
| **39** | 65:35 | 110925 | 205280 | 155428 | 1,85 |
| **40** | 75:25 | 50646 | 93336 | 93699 | 1,84 |

**Beispiel 41: Herstellung von Folien aus den in Beispiel 9-39 erzeugten Blockcopolyimid-Lösungen**

Die Blockcopolyimid-Lösungen aus Beispiel 9 - 39 werden durch eine Filtrationszelle mit 15 μm Filter filtriert und anschließend in einem Exsikkator entgast. Zur Herstellung der Folien wird ein Elcometer 4340 Applicator mit temperierbaren Tisch verwendet. Dieser wird auf 30°C temperiert. Die Block-Copolymer-Lösung wird in das Rakel gefüllt und unter konstanter Ziehgeschwindigkeit auf die temperierte Glasplatte aufgetragen. Der Rakelspalt beträgt dabei 400 μm. Die Glasplatte wird anschließend eine Stunde bei 70°C im Umlufttrockenschrank getrocknet, danach eine weiter Stunde bei 150°C und weitere 12h bei 250°C. Nach dem Abkühlen auf Raumtemperatur werden die Folien im Wasserbad von der Glasplatte abgelöst und getrocknet. Die Folien weisen eine Dicke von 30-50 μm und gute mechanische Eigenschaften aus.

Aus den trockenen Folien werden fehlerfreie Stellen selektiert und kreisrunde Proben mit einem Durchmesser von 46 mm für die Messung der Permeabilitäten und Selektivitäten ausgeschnitten. Die Permeabilitäten verschiedenster Gase werden nach der Vakuummethode bestimmt. Hierbei werden die Folien mit einem Einzelgas (z.B. Stickstoff, Sauerstoff, Methan oder Kohlendioxid) bei verschiedenen Drücken beaufschlagt und die Zunahme des Druckes auf der Permeatseite aufgezeichnet. Daraus wird die Permeabilität in Barrer berechnet.

Die intrinsischen Permeabilitäten und Selektivitäten der einzelnen Blockcopolyimiden werden in Tabelle 17 zusammengefasst. Als Vergleichsbeispiele werden nach dem obigen Verfahren Folien aus den kommerziell erhältlichen Polymeren P84-Typ 70 und P84 HT der Evonik Fibers GmbH herangezogen.

Tabelle 17:

| Polymer | Dicke [μm] | P ($O_2$) [Barrer] | P (N2) [Barrer] | Sel. $O_2/N_2$ | P ($CO_2$) [Barrer] | P($CH_4$) [Barrer] | Sel. $CO_2/CH_4$ |
|---|---|---|---|---|---|---|---|
| Vergleichsbeispiel 1 P84 Typ 70 | 23,4 | 0,18 | 0,02 | 10,0 | 0,57 | 0,01 | 67,2 |
| Vergleichsbeispiel 2 P84HT | 41,4 | 0,53 | 0,04 | 13,2 | 1,69 | 0,01 | 169 |
| Beispiel 9 (A:B=45:55) | 29,1 | 3,81 | 0,49 | 7,8 | | | |
| Beispiel 10 (A:B=70:30) | 33,7 | 1,57 | 0,16 | 9,8 | 4,44 | 0,06 | 74,0 |

(fortgesetzt)

| Polymer | Dicke [μm] | P ($O_2$) [Barrer] | P (N2) [Barrer] | Sel. $O_2/N_2$ | P ($CO_2$) [Barrer] | P($CH_4$) [Barrer] | Sel. $CO_2/CH_4$ |
|---|---|---|---|---|---|---|---|
| Beispiel 11 (A:B=65:35) | 49,2 | 2,38 | 0,26 | 9,0 | 7,70 | 0,12 | 66,8 |
| Beispiel 12 (A:B=55:45) | 46,1 | 2, 68 | 0,30 | 8,9 | 9,12 | 0,15 | 61,6 |
| Beispiel 13 (A:B=50:50) | 37,9 | 3,24 | 0,44 | 7,3 | | | |
| Beispiel 14 (A:B=40:60) | 35,0 | 3,69 | 0,48 | 7,7 | | | |
| Beispiel 15 (A:B=25:75) | 46,4 | 5,06 | 0,76 | 6,7 | 28,15 | 0,71 | 39,9 |
| Beispiel 16 (A:B=45:55 mit B m=10) | 26,3 | 3,39 | 0,37 | 9,1 | | | |
| Beispiel 17 (A:B=45:55 mit B m=10) | 49,0 | 3,95 | 0,54 | 7,4 | | | |
| Beispiel 18 (A:B=55:45) | 40,8 | 1,35 | 0,17 | 7,8 | 3,69 | 0,076 | 48,8 |
| Beispiel 19 (A:B=52:48) | 25,4 | 1,92 | 0,26 | 7,3 | | | |
| Beispiel 25 (A:B=40:60 mit A n=10) | 29,1 | 3,83 | 0,61 | 6,24 | | | |
| Beispiel 26 (A:B=45:55 mit A n=10) | 31,1 | 3,02 | 0,46 | 6,53 | | | |
| Beispiel 27 (A:B=50:50 mit A n=10) | 32,4 | 2,39 | 0,34 | 7,08 | | | |
| Beispiel 28 (A:B=55:45 mit A n=10) | 31,9 | 1,89 | 0,29 | 6,81 | | | |
| Beispiel 29 (A:B=60:40 mit A n=10) | 39,0 | 2,07 | 0,28 | 7,37 | | | |
| Beispiel 30 (A:B=40:60 mit A n=20) | 31,3 | 4,26 | 0,69 | 6,21 | | | |
| Beispiel 31 (A:B=45:55 mit A n=20) | 31,9 | 2,92 | 0,45 | 6,46 | | | |
| Beispiel 32 (A:B=50:50 mit A n=20) | 38,0 | 2,57 | 0,37 | 6,92 | | | |
| Beispiel 33 (A:B=55:45 mit A n=20) | 38,2 | 1,78 | 0,24 | 7,42 | | | |
| Beispiel 35 (A:B=25:75 mit A n=33) | 33,2 | 9,15 | 1,63 | 5,61 | 26,04 | 0,71 | 36,9 |
| Beispiel 36 (A:B=35:65 mit A n=33) | 38,7 | 6,62 | 1,14 | 5,82 | | | |
| Beispiel 37 (A:B=45:55 mit A n=33) | 44,2 | 3,61 | 0,57 | 6,36 | 8,02 | 0,20 | 40,8 |
| Beispiel 38 (A:B=55:45 mit A n=33) | 42,9 | 2,02 | 0,30 | 6,75 | | | |
| Beispiel 39 (A:B=65:35 mit A n=33) | 33,1 | 1,23 | 0,16 | 7,87 | | | |

Für $O_2$ wurden für die Folien aus den erfindungsgemäßen Blockcopolyimiden Permeabilitäten von 1,35 bis 9,15 Barrer gefunden. Für die Folien des Standes der Technik wurden 0,18 bzw. 0,53 Barrer gefunden. Somit sind die Permeabilitäten der erfindungsgemäßen Polymere um den Faktor 2,5 bis 50,8 besser als die der Polymere des Standes

der Technik.

Für $N_2$ wurden für die Folien aus den erfindungsgemäßen Blockcopolyimiden Permeabilitäten von 0,16 bis 1,63 Barrer gefunden. Für die Folien des Standes der Technik wurden 0,02 bzw. 0,04 Barrer gefunden. Somit sind die Permeabilitäten der erfindungsgemäßen Polymere um den Faktor 4 bis 81,5 besser als die der Polymere des Standes der Technik.

Was die Selektivitäten anbetrifft, so wurden für die Folien aus den erfindungsgemäßen Polymeren für $O_2/N_2$ Werte von 6,24 bis 9,8 Barrer gefunden. Die Folien des Standes der Technik wiesen Werte von 10 und 13,2 auf. Die Selektivität der erfindungsgemäßen Polymere ist somit zum Teil vergleichbar, jedoch maximal um den Faktor 2,1 schlechter als die der Homopolymere des Standes der Technik. Stellt man diese leichte Selektivitätseinbuße der deutlich größeren Steigerung der Permeabilität um bis zu einem Faktor von 81,5 gegenüber, so zeigt sich, dass mit den erfindungsgemäßen Polymeren eine klare Steigerung der Permselektivität erreicht wurde. Die erfindungsgemäßen Polymere weisen für das Gaspaar $O_2/N_2$ eine deutlich höhere Produktivität auf.

Auch für $CO_2/CH_4$ konnten diese Ergebnisse bestätigt werden. So konnte eine Zunahme der Permeabilität um den Faktor 71 (Vergleiche Beispiel 26 mit Vergleichsbeispiel 1 oder 2 für Methan) erzielt werden. Die Selektivität verringerte sich jedoch maximal den Faktor 4 (Vergleiche Beispiel 26 mit Vergleichsbeispiel).

**Beispiel 42: Herstellung einer Hohlfasermembran aus einer Blockcopolyimid-Lösungen aus Beispiel 9**

Eine 27,5 Gew.-%ige Lösung aus Beispiel 5 in DMF mit einer Bulkviskosität von 65,9 $Pa.s^{-1}$ wurde auf 50°C thermostatiert, entgast und filtriert und mittels einer Zahnradpumpe durch eine Zweistoffdüse gefördert. Der Fluss der Polymerlösung betrug 337 g/h. Während im Außenbereich der Zweistoffdüse die Polymerlösung gefördert wurde, wurde innen eine Mischung (Bore-Lösung) aus 60% Dimethylformamid und 40% Wasser gefördert, um das Loch der Hohlfasern zu produzieren. Der Fluss der Bore-lösung betrug 110 ml/h. Nach einem Abstand von 13 cm von der Düse trat die Hohlfaser in 70°C warmes Wasser ein. Auf dem Weg zwischen Düse und Fällbad wurde die Hohlfaser mit einem Rohr umhüllt. Dieses Rohr wurde mit einem Stickstoffstrom von 1 l/min durchflutet, der Stickstoffstrom wurde vorgewärmt auf 50°C. Die Faser wurde nach dem Fällbad durch ein 70°C warmes Wasserwaschbad gezogen und schließlich mit einer Geschwindigkeit von 50 m/min aufgewickelt. Nach einer Extraktion mit Wasser über mehrere Stunden wurden die Hohlfasern in Isopropanol getaucht. Nach dem Lösungsmittelaustausch wurden die Membranen bei 70 °C durch eine Trockenstrecke geführt und in ca. 40 Sekunden getrocknet. Während der Trocknung wurde die Faser einmal durch ein 0,3 gew.-%igen Sylgard 184 in iso-Hexan-Lösung gezogen und danach weiter getrocknet. Die erhaltenen Membranen enthalten ca. 2 Gew.% Restwasser, ≤ 0.5 Gew.% Restlösungsmittel (Isopropanol, Isohexan) und < 0.1 Gew.% Rest-DMF und wurden anschließend mit einer Aufheizrate von 2 °C/min auf eine Temperatur von 310 °C in reinem $N_2$ ($O_2$-Gehalt < 0,001 Vol. %) erhitzt und anschließend für 1h bei der Endtemperatur belassen. Nach dem Tempervorgang wurden die Fasern so schnell wie möglich unter 250°C gebracht (ca. 5-10°C/min) und danach weiter bis auf Raumtemperatur abgekühlt.

Die so erhaltenen Hohlfasermembranen hatten eine $O_2$-Permeanz von 46 GPU und eine $O_2/N_2$-Einzelgasselektivität von 7,8. Eine Schichtdicke der trennaktiven Schicht wurde berechnet, bezogen auf $O_2$, von 83 nm und wurde nach folgender Formel ermittelt:

$$l_{HFM} = \frac{Permeabilität}{Permeanz} * 1000$$

mit Schichtdicke lHFM in nm, Permeabilität in Barrer (10-10 cm3(STP).cm.cm-2.s-1.cmHg-1) und Permeanz in GPU (10-6 cm3(STP).cm-2.s-1.cmHg-1). Die Permeanz der Hohlfasermembranen wird, wie in der Sektion Meßmethoden beschrieben, bestimmt. Die Permeabilität wird hingegen nicht an der Hohlfasermembran, sondern an einer Folie aus demselben Material, wie in der Sektion Meßmethoden beschrieben, bestimmt. Dabei ist zu beachten, dass die Permeabilität eine reine Materialeigenschaft bzw. Polymereigenschaft ist und die Permeanz eine Membraneigenschaft. Da die Hohlfasermembran aus dem gleichen Material gemacht wird, wie die Folien, kann die intrinsische Eigenschaft Permeabilität - bestimmt auf Folienbasis - benutzt werden, um die Schichtdicke von Hohlfasermembranen zu bestimmen.

Eine DMF-Löslichkeit von 80% für die Hohlfasermembranen dieses Beispiels wurde ermittelt. Die Festigkeit und Bruchdehnung der Fasern betrugen 1,48 N bzw. 17,7%.

**Vergleichsbeispiel 3: Herstellung einer Hohlfasermembran aus einer P84HT-Lösung aus WO 2011/009919 A1, Beispiel 7**

Die aus Beispiel 7 von WO 2011/009919 A1 enthaltene P84 HT-Lösung in DMF wurde auf 50°C thermostatiert, entgast und filtriert und mittels einer Zahnradpumpe durch eine Zweistoffdüse gefördert. Der Fluss betrug 324 g/h.

Während im Außenbereich der Zweistoffdüse die Polymerlösung gefördert wurde, wurde innen eine Mischung (Bore Lösung) aus 70% Dimethylformamid und 30% Wasser gefördert um das Loch der Hohlfasern zu produzieren. Der Fluss der Bore-lösung betrug 120 ml/h. Nach einem Abstand von 13 cm von der Düse trat die Hohlfaser in 50°C warmes Wasser ein. Auf dem Weg zwischen Düse und Fällbad wurde die Hohlfaser mit einem Rohr umhüllt. Dieses Rohr wurde mit einem Stickstoffstrom von 1 l/min durchflutet, der Stickstoffstrom wurde auf 50°C vorgewärmt. Die Faser wurde durch das Wasserwaschbad gezogen und schließlich mit einer Geschwindigkeit von 50 m/min aufgewickelt.
Nach einer Extraktion mit Wasser über mehrere Stunden wurden die Hohlfasern in Isopropanol getaucht. Danach wurden diese durch eine Trockenstrecke bei 70°C geführt und in ca. 40 Sekunden getrocknet. Die erhaltenen Membranen enthalten weniger als 2 Gew.% Wasser, ≤ 0.5 Gew.% Rest-Lösungsmittel (Isopropanol, Hexan) und 0.1 Gew.% Rest-DMF, und wurden mit einer Aufheizrate von 2°C/min auf 310°C in reinem $N_2$ ($O_2$-Gehalt von 0.001%) erhitzt und anschließend für 1h bei der Endtemperatur belassen. Nach dem Tempervorgang wurden die Fasern so schnell wie möglich unter 250°C gebracht (ca. 5-10°C/min) und danach bis auf Raumtemperatur weiter abgekühlt.

Die erhaltenen Membranen hatten eine $O_2$-Permeanz von 4,6 GPU und eine $O_2/N_2$-Einzelgasselektivität von 10,6. Eine Trennschichtdicke von 115 nm wurde berechnet. Eine DMF-Löslichkeit von 70% wurde ermittelt. Die Festigkeit und Bruchdehnung der Fasern betrugen 2,04 N bzw. 27,9%.

**Vergleichsbeispiel 4: Herstellung einer Hohlfasermembran aus einer P84 Typ 70-Lösung aus WO 2011/009919 A1, Beispiel 2**

Die aus WO 2011/009919 A1, Beispiel 2 enthaltene P84 Typ70-Lösung wurde auf 50°C thermostatiert, entgast, filtriert und mittels einer Zahnradpumpe durch eine Zweistoffdüse gefördert. Der Fluss betrug 324 g/h. Während im Außenbereich der Zweistoffdüse die Polymerlösung gefördert wurde, wurde innen eine Mischung (Bore Lösung) aus 70% Dimethylformamid und 30% Wasser gefördert, um das Loch der Hohlfasern zu produzieren. Der Fluss der Bore-Lösung betrug 120 ml/h. Nach einem Abstand von 13 cm von der Düse trat die Hohlfaser in 50°C warmes Wasser ein. Auf dem Weg zwischen Düse und Fällbad wurde die Hohlfaser mit einem Rohr umhüllt. Dieses Rohr wurde mit einem Stickstoffstrom von 0,5 l/min durchflutet, der Stickstoffstrom wurde auf 50°C vorgewärmt. Die Faser wurde durch das Wasserwaschbad gezogen und schließlich mit einer Geschwindigkeit von 50 m/min aufgewickelt. Nach einer Extraktion mit Wasser über mehrere Stunden wurden die Hohlfasern in Isopropanol getaucht. Danach wurden diese durch eine Trockenstrecke bei 70°C geführt und in ca. 40 Sekunden getrocknet. Die erhaltenen Membranen enthalten weniger als 2 Gew.% Wasser, ≤ 0.5 Gew.% Rest-Lösungsmittel (Isopropanol, Hexan) und 0.1 Gew.% Rest DMF, wurden mit einer Aufheizrate von 2°C/min auf 290°C in reinem $N_2$ ($O_2$-Gehalt von 0.001%) erhitzt und anschließend für 1h bei der Endtemperatur belassen. Nach dem Tempervorgang wurden die Fasern so schnell wie möglich unter 250°C gebracht (ca. 5-10°C/min) und danach bis auf Raumtemperatur weiter abgekühlt.

Die erhaltenen Membranen hatten eine $O_2$-Permeanz von 2,0 GPU und eine $O_2/N_2$-Einzelgasselektivität von 6,7. Eine Trennschichtdicke (bezogen auf $O_2$) von 91 nm wurde berechnet. Eine DMF-Löslichkeit von 70% wurde ermittelt. Die Festigkeit und Bruchdehnung der Fasern betrugen 2,16 N bzw. 34,0%.

Die $O_2$-Permeanz der hergestellten Hohlfasermembranen aus Beispiel 42 sind um den Faktor 10 höher als die aus Vergleichsbeispiel 3 und ein Faktor 23 höher als die aus Vergleichsbeispiel 4, in denen jeweils die Blöcke A der vorliegenden Erfindung als Homopolymere eingesetzt wurden. Dies ist besonders auch deshalb bemerkenswert, weil die Schichtdicke der trennaktiven Schichte nur wenig Unterschied aufweisen.

## Patentansprüche

1. Blockcopolyimid umfassend die Blöcke (A) und (B) mit den nachfolgenden Strukturen (Ia) und (Ib)

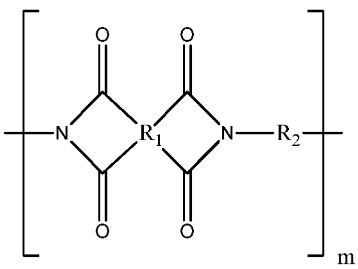

(Ia)

Block A

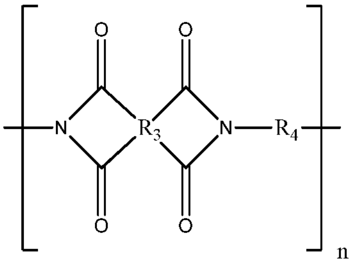 (Ib)

Block B

,

**dadurch gekennzeichnet,**
**dass** die Blocklängen n und m der Blöcke (A) und (B), die gleich oder unterschiedlich sein können, jeweils 1 bis 1000 beträgt, und
**dass** R1 mindestens eine oder beide der funktionalen Gruppen $R_1$a oder $R_1$b enthält und

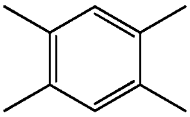 , 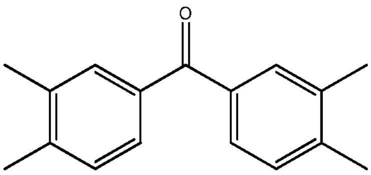

R1a R1b

dass R2 mindestens eine oder 2 oder 3 der funktionalen Gruppen $R_2$a, $R_2$b oder $R_2$c enthält

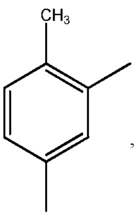 , 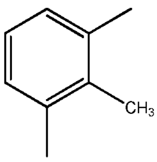 , 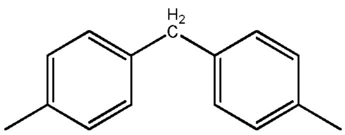

R2a R2b R2c

und dass R3 mindestens eine oder mehrere der funktionale Gruppen$R_3$a, $R_3$b oder $R_3$c enthält

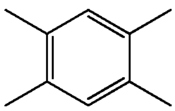 , 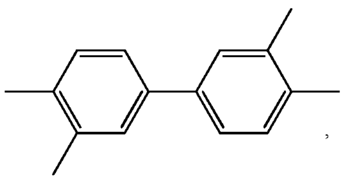 ,

R3a R3b

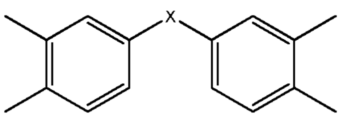

R3c

mit X= 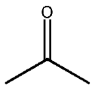 , 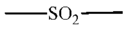 , 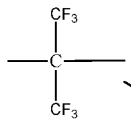 , 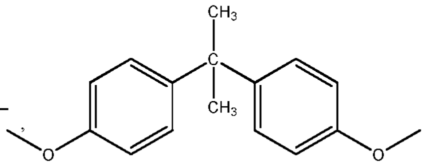 ,

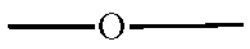

und dass R4 mindestens eine oder mehrere der folgenden funktionalen Gruppen $R_4$a, $R_4$b oder $R_4$c enthält

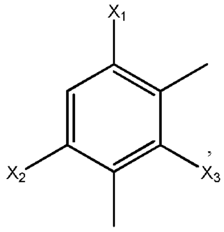 , 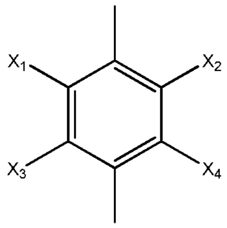 , 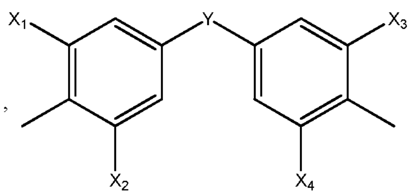

R4a R4b R4c

mit $X_1$, $X_2$, $X_3$ und $X_4$ sind entweder H oder $CH_3$ oder Alkylreste mit $C_2$ bis $C_4$
und Y = $-CH_2-$, $-(CH_3)_2C-$, $SO_2$,- $(CF_3)_2C-$, -CO-, -COO-,-CONH-,-O-

wobei mindestens einer der Reste $X_1$ bis $X_4$, bevorzugt mindestens zwei der Reste $X_1$ bis $X_4$, besonders bevorzugt mindestens drei der Reste $X_1$ bis $X_4$ und ganz besonders bevorzugt alle Reste $X_1$ bis $X_4$ gleich $CH_3$ oder ein $C_2$ bis $C_4$ Alkylrest sind und die funktionalen Gruppen $R_1$ bis $R_4$ so ausgewählt werden, dass die Blöcke A und B eine unterschiedliche Zusammensetzung aufweisen.

**2.** Blockcopolyimid nach Anspruch 1,
**dadurch gekennzeichnet,**

**dass** die Blocklängen n und m der Blöcke (A) und (B) jeweils 1 bis 500, bevorzugt 1 bis 200, besonders bevorzugt 5 bis 150, speziell bevorzugt 10 bis 100, ganz speziell bevorzugt 10 bis 50 und am meisten bevorzugt 10 bis 40 beträgt
und/oder
**dass** Molekulargewicht $M_n$ des erfindungsgemäßen Blockcopolyimids (bezogen auf Polystyrolstandards) im Bereich von 10 000 bis 200000 g/mol, bevorzugt im Bereich von 20 000 bis 150000 g/mol, besonders bevorzugt im Bereich von 20 000 bis 120000 g/mol und ganz besonders bevorzugt im Bereich von 30000 bis 100000 g/mol liegt
und/oder
**dass** das Molekulargewicht $M_w$ des Blockcopolyimids im Bereich von 10000 bis 500000 g/mol, bevorzugt 50000 bis 300000 g/mol und besonders bevorzugt 80000 bis 200000 g/mol liegt
und/oder
**dass** der Polydispersitätsindex ) im Bereich von 1 bis 10, bevorzugt im Bereich von 1 bis 5, besonders bevorzugt im Bereich von 1 bis 4, ganz besonders bevorzugt im Bereich von 1,5 bis 3,5 und speziell bevorzugt im Bereich von 1,5 bis 3 liegt.

**3.** Blockcopolyimid nach Anspruch 1 oder 2,
**dadurch gekennzeichnet,**
**dass** der Block (B), in isolierter Form, in einem aprotisch dipolaren Lösungsmittel löslich ist.

**4.** Blockcopolyimid nach einem der Ansprüche 1 bis 3,
**dadurch gekennzeichnet,**

**dass** $R_1$ in Summe zu > 50 mol %, bevorzugt zu ≥ 70 mol %, besonders bevorzugt zu ≥ 80 mol %, ganz besonders bevorzugt zu 90 bis 100 mol%, speziell bevorzugt zu 95 bis 100 mol% und ganz speziell bevorzugt

zu 100 mol% aus den Gruppen $R_1$a und $R_1$b, sowie ggf. weiteren tetravalenten, aromatischen, funktionale Gruppen besteht,
und/oder
**dass** $R_2$ in Summe zu > 50 mol %, bevorzugt zu ≥ 70 mol %, besonders bevorzugt zu ≥ 80 mol %, ganz besonders bevorzugt zu 90 bis 100 mol%, speziell bevorzugt zu 95 bis 100 mol% und ganz speziell bevorzugt zu 100 mol% aus den Gruppen $R_2$a, $R_2$b und/oder $R_2$C und ggf. weiteren divalenten, aromatischen, funktionalen Gruppen, bevorzugt in Orthostellung mit einem $C_1$ - $C_4$-Alkylrest, bevorzugt $CH_4$, substituierten divalenten aromatischen Gruppen besteht,
und/oder
**dass** $R_3$ in Summe zu > 50 mol %, bevorzugt zu ≥ 60 mol %, besonders bevorzugt zu ≥ 70 mol %, ganz besonders bevorzugt zu 80 bis 100 mol%, speziell bevorzugt zu 90 bis 100 mol% und ganz speziell bevorzugt zu 100 mol% aus den Gruppen $R_3$a, $R_3$b und/oder $R_3$c sowie ggf. weiteren tetravalenten, aromatischen, funktionalen Gruppen besteht, und/oder
**dass** $R_4$ in Summe zu > 50 mol %, bevorzugt zu ≥ 65 mol %, besonders bevorzugt zu ≥ 80 mol %, ganz besonders bevorzugt zu 90 bis 100 mol%, speziell bevorzugt zu 95 bis 100 mol% und ganz speziell bevorzugt zu 100 mol% aus den Gruppen $R_4$a, $R_4$b und/oder $R_4$c und ggf. weiteren divalenten, aromatischen, funktionalen Gruppen, bevorzugt in Orthostellung mit einem $C_1$ - $C_4$-Alkylrest, bevorzugt $CH_4$, substituierten divalenten aromatischen Gruppen, besteht.

**5.** Blockcopolyimid nach Anspruch 4,
**dadurch gekennzeichnet,**

**dass** $R_1$ aus 0 bis 100 mol% $R_1$a und 0 bis 100 mol% $R_1$b besteht, bevorzugt aus 0 bis 80 mol% $R_1$a und 100 bis 20 mol% $R_1$b, besonders bevorzugt aus 0 bis 40 mol% $R_1$a und 100 bis 60 mol% $R_1$b und ganz besonders bevorzugt aus $0 \leq R_1a \leq 50$ mol% und $100 \geq R_1b \geq 50$ mol%, wobei die Molprozente der funktionalen Gruppen $R_1$a und $R_1$b in den genannten Bereichen jeweils so gewählt werden, dass sie in Summe 100 mol% der funktionalen Gruppen $R_1$ ergeben
und/oder
**dass** $R_2$ aus 0 bis 100 mol% $R_2$a und/oder 0 bis 100 mol% $R_2$b und/oder 0 bis 100 mol% $R_2$c besteht, bevorzugt aus 40 bis 100 mol% $R_2$a und 0 bis 60 mol% $R_2$b und 0 bis 60 mol% $R_2$c, besonders bevorzugt aus 50 bis 90 mol% $R_2$a und 10 bis 50 mol% $R_2$b und 0 bis 40 mol% $R_2$c, wobei die Molprozente der funktionalen Gruppen $R_2$a, $R_2$b und $R_2$c in den genannten Bereichen jeweils so gewählt werden, dass sie in Summe 100 mol% der funktionalen Gruppen $R_2$ ergeben
und/oder
**dass** $R_3$ aus 0 bis 100 mol% $R_3$a und/oder 0 bis 100 mol% $R_3$b und/oder 0 bis 100 mol% $R_3$c, ganz besonders bevorzugt aus 30 bis 100 mol% $R_3$a und/oder 0 bis 40 mol% $R_3$b und 30 bis 100 mol% $R_3$c bzw. speziell bevorzugt aus 0 bis 75 mol% $R_3$a und/oder 0 bis 75 mol% $R_3$b und 25 bis 100 mol% $R_3$c, ganz speziell bevorzugt aus 0 bis 60 mol% $R_3$a und 0 bis 15 mol% $R_3$b und 100 bis 25 mol% $R_3$c und am meisten bevorzugt aus 25 bis 75 mol% $R_3$a und 75 bis 25 mol% $R_3$c wobei die Molprozente der funktionalen Gruppen $R_3$a, $R_3$b und $R_3$c in den genannten Bereichen jeweils so gewählt werden, dass sie in Summe 100 mol% der funktionalen Gruppe $R_3$ ergeben
und/oder
**dass** $R_4$ aus 0 bis 100 mol% $R_4$a und 0 bis 100 mol% $R_4$b und 0 bis 100 mol% $R_4$c besteht, wobei die Molprozente der funktionalen Gruppen $R_4$a, $R_4$b und $R_4$c in den genannten Bereichen jeweils so gewählt werden, dass sie in Summe 100 mol% der funktionalen Gruppen $R_4$ ergeben, ganz besonders bevorzugt aus 100 mol% $R_4$a oder 100 mol% $R_4$c speziell bevorzugt aus 100 mol% $R_4$a mit $X_1$, $X_2$ und $X_3$=$CH_4$ besteht . oder $R_4$ einem Gemisch aus mindestens zwei der funktionalen gruppen $R_4$a, $R_4$b oder $R_4$c besteht, wobei das Gemisch bevorzugt zu 30 bis 99 mol%, mehr bevorzugt zu 40 bis 90 mol% und am meisten bevorzugt zu 50 bis 80 mol% aus $R_4$a und der Rest zu 100 mol% $R_4$ in diesen Fällen aus $R_4$b und/oder $R_4$c besteht.

**6.** Blockcopolyimid nach einem der Ansprüche 1 bis 5,
**dadurch gekennzeichnet,**
**dass** es folgende Zusammensetzungen aufweist:

Block (A) besteht aus:

100 mol% $R_1$b sowie 64 mol% $R_2$a, 16 mol% $R_2$b und 20 mol% $R_2$c .
oder

40 mol% $R_1a$, 60 mol% $R_1b$ sowie 80 mol% $R_2a$ und 20 mol% $R_2b$.

und Block (B) besteht aus
40 bis 60 mol% $R_3a$, 0 bis 10 mol% $R_3b$, 60 bis 30 mol% $R_3c$ sowie 90 bis 100 mol% $R_4a$, 0 bis 10 mol% $R_4b$ und 0 bis 10 mol% $R_4c$.
oder
50 mol% $R_3a$, 50 mol% $R_3c$ sowie 100 mol% $R_4a$,
wobei sich die angegebenen Molprozente auf die funktionalen Gruppen $R_1$, $R_2$, $R_3$ und $R_4$ beziehen, so dass die Mengen der die verschiedenen Einheiten jeweils so ausgewählt werden, dass sich für diese Gruppen jeweils in Summe 100 mol% ergibt.

**7.** Verfahren zur Herstellung eines Blockcopolyimids nach einem der Ansprüche 1 bis 6,
**dadurch gekennzeichnet,**
**dass**

a. ein Oligoimid mit endständigen Anhydriden aus mindestens einem Dianhydrid der Formel (II)

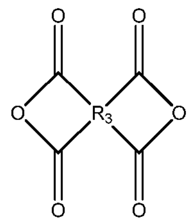

(II)

und mindestens einem Diamin der Formel (III)

$$H_2N\text{-}R_4\text{-}NH_2 \qquad (III)$$

wobei $R_3$ und $R_4$ wie in Anspruch 1 definiert sind, hergestellt wird, und
b. **dass** das Oligo- bzw. polyimid aus Schritt a) mit mindestens einem Dianhydrid der Formel (IV)

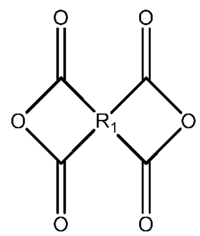

(IV)

und mindestens einem Diisocyanat (V)

$$OCN\text{-}R_2\text{-}NCO \qquad (V)$$

wobei $R_1$ und $R_2$ wie in Anspruch 1 definiert sind, zu einem Blockcopolyimid umgesetzt wird und wobei in Schritt b) bevorzugt ein Katalysator verwendet wird.

**8.** Verfahren nach Anspruch 7,
**dadurch gekennzeichnet,**
**dass** Schritt a) die nachfolgenden Teilschritte umfasst:

a1) Herstellung einer Oligoamidsäure aus mindestens einem Diamin gemäß Formel (III) und mindestens einem Dicarbonsäureanhydrid gemäß Formel (II) in einem aprotisch dipolaren Lösungsmittel, wobei das Dicarbonsäureanhydrid im molaren Überschuss vorliegt
a2) Imidisierung der Oligoamidsäure,

a3) Ausfällen des Oligoimids aus Schritt a2)
a4) Waschen, bevorzugt mit Wasser
a5) Trocknen, bevorzugt bei 30 bis 200 °C, bevorzugt bei 70 bis 150°C und/oder konditionieren, bevorzugt bei 200 bis 400 °C, besonders bevorzugt bei 200 bis 300°C.

**9.** Verfahren nach Anspruch 8,
**dadurch gekennzeichnet,**
**dass** die Imidisierung in Schritt a2) thermisch oder chemisch erfolgt, wobei bei die chemische Imidisierung durch Zugabe einer Bases und eines wasserentziehenden Mittels erfolgt, wobei die Base besonders bevorzugt nur in einer katalytischen Menge zugegeben wird.

**10.** Verfahren nach einem der Ansprüche 7 bis 9,
**dadurch gekennzeichnet,**
**dass** als basischer Katalysator tertiäre organische Amine und/oder basische Salze, besonders bevorzugt KOH, NaOH oder Natriummethanolat, verwendet werden.

**11.** Verfahren nach einem der Ansprüche 7 bis 10,
**dadurch gekennzeichnet,**
**dass** Schritt b) die nachfolgenden Teilschritte umfasst:

b1) eine Lösung aus dem Oligoimid aus Schritt a. wird zusammen mit PMDA und /oder mit BTDA und mit einem basischen Katalysator in einem aprotisch dipolaren Lösungsmittel hergestellt und
b2) durch, bevorzugt kontinuierliche, Zugabe mindestens eines Diisocyanats oder einer Mischung mehrerer Diisocyanate, ausgewählt aus der Gruppe bestehend aus 2,4-TDI 2,6-TDI und 4,4'-MDI, wird ein Blockcopolymer gebildet.

**12.** Verfahren zur Herstellung eines Blockcopolyimids nach einem der Ansprüche 1 bis 6,
**dadurch gekennzeichnet,**
**dass**

(i) ein Oligoimid mit endständigen Anhydriden aus mindestens einem Dianhydrid der Formel (IV)

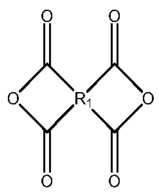
(IV)

und mindestens einem Diisocyanat der Formel (V)

$$OCN\text{-}R_2\text{-}NCO \qquad (V)$$

wobei $R_1$ und $R_2$ wie in Anspruch 1 definiert sind, hergestellt wird, und
(ii) **dass** ein Polyimid/Polyamidsäure Blockcopolymer durch Umsetzung des aus Schritt (i) erhaltenen Blocks (A) mit mindestens einem Dianhydrid der Formel (II)

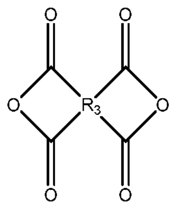
(II)

wobei $R_3$ wie oben beschrieben definiert ist, und mindestens einem Diamin der Formel (III)

$H_2N-R_4-NH_2$ (III),

wobei $R_3$ und $R_4$ wie in Anspruch 1 definiert sind, hergestellt wird, und/oder mit einem aus mindestens einem Dianhydrid der Formel (II) und mindestens einem Diamin der Formel (III) hergestellten Block (B) mit endständigen Aminogruppen, hergestellt wird, und
(iii)das nach Schritt iii) entstandene Polyimid/Polyamidsäure Copolymer chemisch imidisiert wird, bevorzugt mit Pyridin und Acetanhydrid

**13.** Asymmetrisch integrale Hohlfasermembran oder asymmetrisch integrale Flachmembran hergestellt aus einem Blockcopolyimid nach einem der Ansprüche 1 bis 6, bevorzugt direkt aus der während der Herstellung des Blockcopolyimids nach einem der Ansprüche 1 bis 5 erhaltenen Polymerlösung, d.h. ohne zwischenzeitliche Isolierung des Blockcopolyimids als Pulver.

**14.** Hohlfasermembranmodule umfassend eine asymmetrisch integrale Hohlfasermembran nach Anspruch 13 oder Spiralwickelelemente umfassend eine asymmetrisch integrale nach Anspruch 13.

**15.** Verfahren zur Trennung von Gasen,
**dadurch gekennzeichnet,**
**dass** eine asymmetrisch integrale Hohlfasermembran oder asymmetrisch integrale Flachmembran nach Anspruch 13 oder ein Hohlfasermembranmodul und/oder ein Spiralwickelelement nach Anspruch 14 zur Trennung des Gasgemisches verwendet wird.

**16.** Vorrichtung zur Trennung von Gasen umfassend eine asymmetrisch integrale Hohlfasermembran oder asymmetrisch integrale Flachmembran nach Anspruch 13 oder ein Hohlfasermembranmodul und/oder ein Spiralwickelelement nach Anspruch 14.

**Claims**

**1.** Block copolyimide comprising the blocks (A) and (B) having the following structures (Ia) and (Ib)

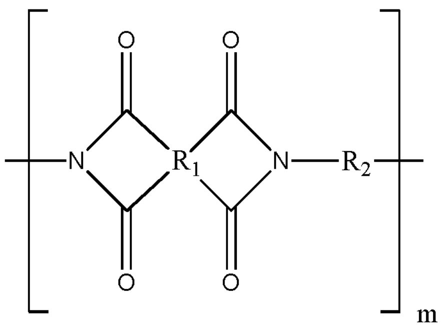

(Ia)

Block A

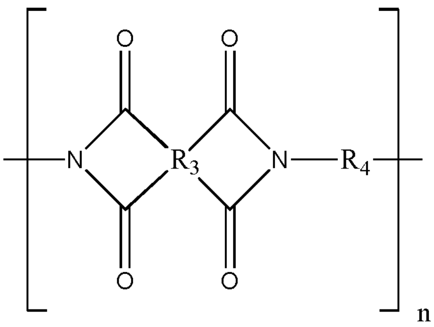 (Ib)

Block B

,

**characterized in that**

the block lengths n and m of blocks (A) and (B), which may be identical or different, are each from 1 to 1000, and R1 contains either or both of the functional groups $R_1a$ or $R_1b$ and

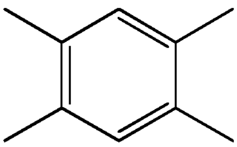 ,

R1a

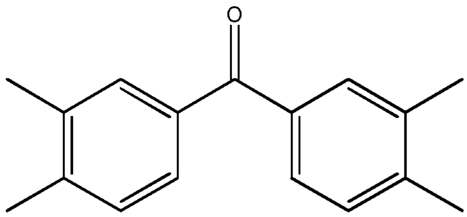

R1b

R2 contains at least one or 2 or 3 of the functional groups $R_2a$, $R_2b$ or $R_2c$

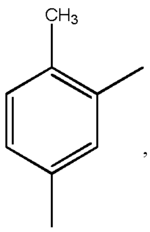 ,

R2a

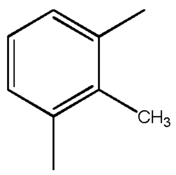 ,

R2b

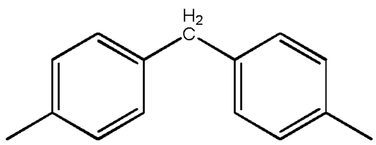

R2c

and that R3 contains at least one or more of the functional groups $R_3a$, $R_3b$ or $R_3c$

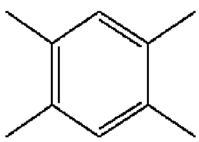 ,

R3a

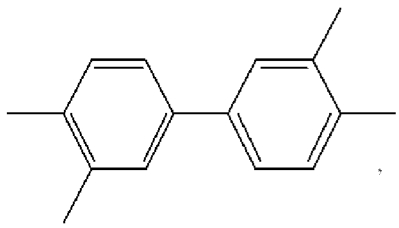 ,

R3b

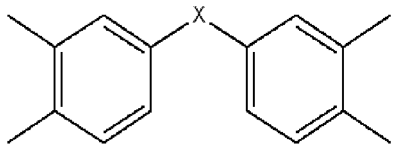

R3c

where X= 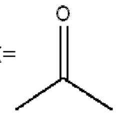 , $-SO_2-$ , 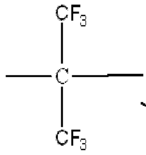 , 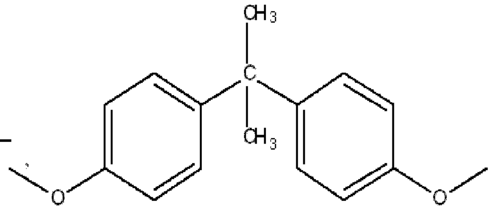

$-O-$

and that R4 contains at least one or more of the following functional groups $R_4a$, $R_4b$ or $R_4c$

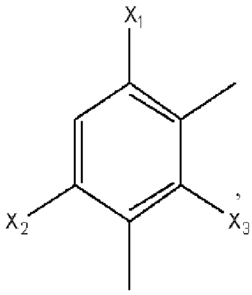 , 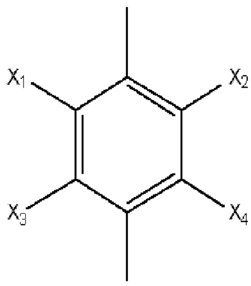 , 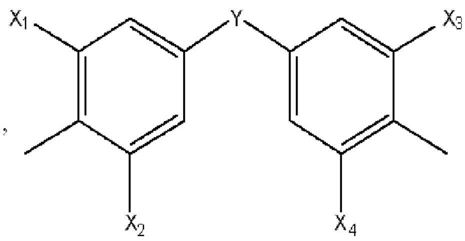

R4a R4b R4c

where $X_1$, $X_2$, $X_3$ and $X_4$ are either H or $CH_3$ or alkyl radicals with $C_2$ to $C_4$
and Y = $-CH_2-$, $-(CH_3)_2C-$, $SO_2$, $-(CF_3)_2C-$, -CO-, -COO-,-CONH-,-O-

wherein at least one of the radicals $X_1$ to $X_4$, preferably at least two of the radicals $X_1$ to $X_4$, more preferably at least three of the radicals $X_1$ to $X_4$ and most preferably all the radicals $X_1$ to $X_4$ are equal to $CH_3$ or a $C_2$ to $C_4$ alkyl radical and the functional groups $R_1$ to $R_4$ are selected such that the blocks A and B have a differing composition.

**2.** Block copolyimide according to Claim 1,
**characterized in that**
the block lengths n and m of blocks (A) and (B) are each from 1 to 500, preferably from 1 to 200, more preferably from 5 to 150, yet still more preferably from 10 to 100, yet still even more preferably from 10 to 50 and most preferably from 10 to 40,
and/or
the molecular weight $M_n$ of the block copolyimide according to the invention is (based on polystyrene standards) in the range from 10 000 to 200 000 g/mol, preferably in the range from 20 000 to 150 000 g/mol, more preferably in the range from 20 000 to 120 000 g/mol and most preferably in the range from 30 000 to 100 000 g/mol,
and/or
**in that** the molecular weight $M_w$ of the block copolyimide is in the range from 10 000 to 500 000 g/mol, preferably in the range from 50 000 to 300 000 g/mol and more preferably in the range from 80 000 to 200 000 g/mol,
and/or
**in that** the polydispersity index ) is in the range from 1 to 10, preferably in the range from 1 to 5, more preferably in the range from 1 to 4, yet more preferably in the range from 1.5 to 3.5 and most preferably in the range from 1.5 to 3.

3. Block copolyimide according to Claim 1 or 2,
**characterized in that**
the block (B) in isolated form is soluble in an aprotic dipolar solvent.

4. Block copolyimide according to any of Claims 1 to 3,
**characterized in that**
$R_1$ consists in total to an extent > 50 mol%, preferably to an extent ≥ 70 mol%, more preferably to an extent ≥ 80 mol%, yet more preferably to an extent from 90 to 100 mol%, yet still more preferably to an extent from 95 to 100 mol% and most preferably to a 100 mol% extent of groups $R_1a$ and $R_1b$ and also any further tetravalent, aromatic, functional groups,
and/or
$R_2$ consists in total to an extent > 50 mol%, preferably to an extent ≥ 70 mol%, more preferably to an extent ≥ 80 mol%, yet more preferably to an extent from 90 to 100 mol%, yet still more preferably to an extent from 95 to 100 mol% and most preferably to a 100 mol% extent of groups $R_2a$, $R_2b$ and/or $R_2c$ and any further divalent, aromatic, functional groups, preferably divalent aromatic groups substituted in ortho position with a $C_1$-$C_4$ alkyl radical, preferably $CH_4$,
and/or
$R_3$ consists in total to an extent > 50 mol%, preferably to an extent ≥ 60 mol%, more preferably to an extent ≥ 70 mol%, yet more preferably to an extent from 80 to 100 mol%, yet still more preferably to an extent from 90 to 100 mol% and most preferably to a 100 mol% extent of groups $R_3a$, $R_3b$ and/or $R_3c$ and also any further tetravalent, aromatic, functional groups,
and/or
$R_4$ consists in total to an extent > 50 mol%, preferably to an extent ≥ 65 mol%, more preferably to an extent ≥ 80 mol%, yet more preferably to an extent from 90 to 100 mol%, yet still more preferably to an extent from 95 to 100 mol% and most preferably to a 100 mol% extent of groups $R_4a$, $R_4b$ and/or $R_4c$ and any further divalent, aromatic, functional groups, preferably divalent aromatic groups substituted in ortho position with a $C_1$-$C_4$ alkyl radical, preferably $CH_4$.

5. Block copolyimide according to Claim 4,
**characterized in that**
R1 consists of 0 to 100 mol% $R_1a$ and 0 to 100 mol% $R_1b$, preferably of 0 to 80 mol% $R_1a$ and 100 to 20 mol% $R_1b$, more preferably of 0 to 40 mol% $R_1a$ and 100 to 60 mol% $R_1b$ and most preferably of $0 \leq R_1a \leq 50$ mol% and $100 \geq R_1b \geq 50$ mol%, wherein the mole percentages of the functional groups $R_1a$ and $R_1b$ are in each case chosen within the recited ranges such that they total 100 mol% of functional groups $R_1$,
and/or
$R_2$ consists of 0 to 100 mol% $R_2a$ and/or 0 to 100 mol% $R_2b$ and/or 0 to 100 mol% $R_2c$, preferably of 40 to 100 mol% $R_2a$ and 0 to 60 mol% $R_2b$ and 0 to 60 mol% $R_2c$, more preferably of 50 to 90 mol% $R_2a$ and 10 to 50 mol% $R_2b$ and 0 to 40 mol% $R_2c$, wherein the mole percentages of the functional groups $R_2a$, $R_2b$ and $R_2c$ are in each case chosen within the recited ranges such that they total 100 mol% of functional groups $R_2$,
and/or
$R_3$ consists of 0 to 100 mol% $R_3a$ and/or 0 to 100 mol% $R_3b$ and/or 0 to 100 mol% $R_3c$, yet more preferably of 30 to 100 mol% $R_3a$ and/or 0 to 40 mol% $R_3b$ and 30 to 100 mol% $R_3c$ or, respectively, yet still more preferably of 0 to 75 mol% $R_3a$ and/or 0 to 75 mol% $R_3b$ and 25 to 100 mol% $R_3c$, yet still even more preferably of 0 to 60 mol% $R_3a$ and 0 to 15 mol% $R_3b$ and 100 to 25 mol% $R_3c$ and most preferably of 25 to 75 mol% $R_3a$ and 75 to 25 mol% $R_3c$, wherein the mole percentages of the functional groups $R_3a$, $R_3b$ and $R_3c$ are in each case chosen within the recited ranges such that they total 100 mol% of functional groups $R_3$
and/or
$R_4$ consists of 0 to 100 mol% $R_4a$ and 0 to 100 mol% $R_4b$ and 0 to 100 mol% $R_4c$, wherein the mole percentages of the functional groups $R_4a$, $R_4b$ and $R_4c$ are in each case chosen within the recited ranges such that they total 100 mol% of functional groups $R_4$, yet more preferably of 100 mol% $R_4a$ or 100 mol% $R_4c$, most preferably of 100 mol% $R_4a$ where $X_1$, $X_2$ and $X_3$=$CH_4$, or $R_4$ consists of a mixture of at least two of the functional groups $R_4a$, $R_4b$ or $R_4c$, where the mixture preferably consists to an extent of 30 to 99 mol%, more preferably to an extent of 40 to 90 mol% and most preferably to an extent of 50 to 80 mol% of $R_4a$ and the remainder to 100 mol% of $R_4$ in these cases of $R_4b$ and/or $R_4c$

6. Block copolyimide according to any of Claims 1 to 5,
**characterized in that**
it has the following compositions:

block (A) consists of:

100 mol% $R_1$b and also 64 mol% $R_2$a, 16 mol% $R_2$b and 20 mol% $R_2$c,
or
40 mol% $R_1$a, 60 mol% $R_1$b and also 80 mol% $R_2$a and 20 mol% $R_2$b,

and block (B) consists of

40 to 60 mol% $R_3$a, 0 to 10 mol% $R_3$b, 60 to 30 mol% $R_3$c and also 90 to 100 mol% $R_4$a, 0 to 10 mol% $R_4$b and 0 to 10 mol% $R_4$c,
or
50 mol% $R_3$a, 50 mol% $R_3$c and also 100 mol% $R_4$a,

wherein the recited mole percentages relate to the functional groups $R_1$, $R_2$, $R_3$ and $R_4$ such that the amounts of the various units are each selected such that the sum total is 100 mol% for each of these groups.

**7.** Process for preparing a block copolyimide according to any of Claims 1 to 6,
**characterized in that**

a. an oligoimide having terminal anhydrides is prepared from at least one dianhydride of formula (II)

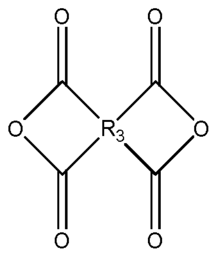

(II)

and at least one diamine of formula (III)

$H_2N-R_4-NH_2$ (III)

wherein $R_3$ and $R_4$ are each as defined in Claim 1, and
b. the oligo/polyimide of step a) is reacted with at least one dianhydride of formula (IV)

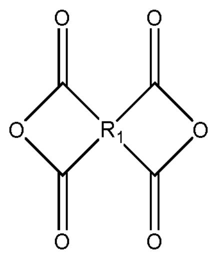

(IV)

and at least one diisocyanate (V)

$OCN-R_2NCO$ (V)

wherein $R_1$ and $R_2$ are each as defined in Claim 1, to form a block copolyimide and wherein step b) is preferably carried out using a catalyst.

**8.** Process according to Claim 7,
**characterized in that**
step a) comprises the following subsidiary steps:

a1) preparing an oligoamide acid from at least one diamine of formula (III) and at least one dicarboxylic anhydride

of formula (II) in an aprotic dipolar solvent, wherein the dicarboxylic anhydride is present in molar excess,
a2) imidating the oligoamide acid,
a3) precipitating the oligoimide of step a2)
a4) washing, preferably with water
a5) drying, preferably at 30 to 200°C, preferably at 70 to 150°C and/or conditioning, preferably at 200 to 400°C, more preferably at 200 to 300°C.

**9.** Process according to Claim 8,
**characterized in that**
the imidating in step a2) is effected thermally or chemically, wherein chemical imidizing is effected by adding a base and a water-withdrawing agent, wherein the base is more preferably admixed in just a catalytic amount.

**10.** Process according to any of Claims 7 to 9,
**characterized in that**
tertiary organic amines and/or basic salts, more preferably KOH, NaOH or sodium methoxide, are used as basic catalyst.

**11.** Process according to any of Claims 7 to 10,
**characterized in that**
step b) comprises the following subsidiary steps:

b1) preparing a solution of the oligoimide of step a. in an aprotic dipolar solvent together with PMDA and/or with BTDA and with a basic catalyst, and
b2) adding at least one diisocyanate or a mixture of two or more diisocyanates selected from the group consisting of 2,4-TDI, 2,6-TDI and 4,4'-MDI in a preferably continuous manner to form a block copolymer.

**12.** Process for preparing a block copolyimide according to any of Claims 1 to 6,
**characterized in that**

(i) an oligoimide having terminal anhydrides is prepared from at least one dianhydride of formula (IV)

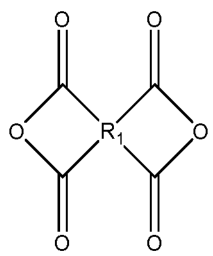
(IV)

and at least one diisocyanate of formula (V)

$$OCN-R_2-NCO \quad (V)$$

wherein $R_1$ and $R_2$ are each as defined in Claim 1, and
(ii) a polyimide/polyamide acid block copolymer is prepared by reacting block (A) as obtained from step (i) with at least one dianhydride of formula (II)

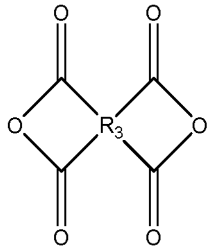
(II)

where $R_3$ is defined as described above,

and at least one diamine of formula (III)

$$H_2N\text{-}R_4\text{-}NH_2 \qquad \text{(III)},$$

wherein $R_3$ and $R_4$ are each as defined in Claim 1,
and/or is prepared with one block (B) having terminal amino groups and prepared from at least one dianhydride of formula (II) and at least one diamine of formula (III),
and
(iii) the polyimide/polyamide acid copolymer formed in step iii) is chemically imidated, preferably with pyridine and acetic anhydride

**13.** Asymmetrically integral hollow fiber membrane or asymmetrically integral flat sheet membrane prepared from a block copolyimide according to any of Claims 1 to 6, preferably directly from the polymer solution obtained during the preparation of the block copolyimide according to any of Claims 1 to 5, i.e. without intervening isolation of the block copolyimide as powder.

**14.** Hollow fiber membrane modules comprising an asymmetrically integral hollow fiber membrane according to Claim 13 or spiral wound elements comprising an asymmetrically integral one according to Claim 13.

**15.** Process for separation of gases
**characterized in that**
an asymmetrically integral hollow fiber membrane or asymmetrically integral flat sheet membrane according to Claim 13 or a hollow fiber membrane module and/or a spiral wound element according to Claim 14 is used for separating the gas mixture.

**16.** Device for separation of gases comprising an asymmetrically integral hollow fiber membrane or asymmetrically integral flat sheet membrane according to Claim 13 or a hollow fiber membrane module and/or a spiral wound element according to Claim 14.

## Revendications

**1.** Copolyimide à blocs comprenant les blocs (A) et (B) présentant les structures suivantes (Ia) et (Ib)

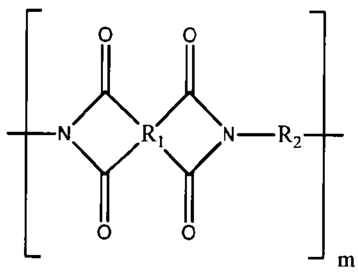

(Ia)

Bloc A

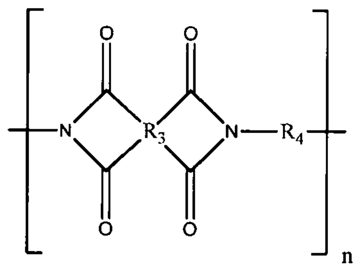

(Ib)

,

Bloc B

**caractérisé en ce que** les longueurs de bloc n et m des blocs (A) et (B), qui peuvent être identiques ou différentes,

sont chacune de 1 à 1000, et **en ce que** $R_1$ contient au moins un des groupes fonctionnels $R_{1a}$ ou $R_{1b}$ ou les deux

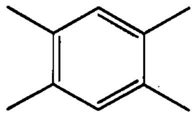

,

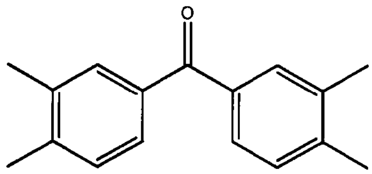

R1a R1b

et **en ce que** $R_2$ contient au moins un ou 2 ou 3 des groupes fonctionnels $R_{2a}$, $R_{2b}$ ou $R_{2c}$

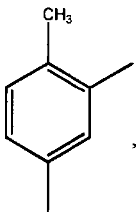

,

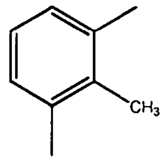

,

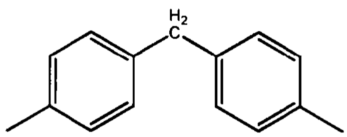

R2a R2b R2c

et **en ce que** $R_3$ contient au moins un ou plusieurs des groupes fonctionnels $R_{3a}$, $R_{3b}$ ou $R_{3c}$

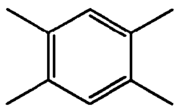

,

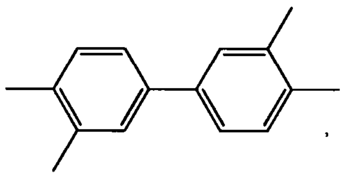

,

R3a R3b

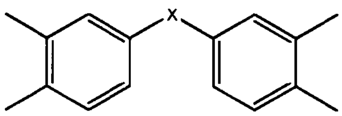

R3c

avec X

= 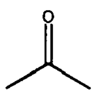 , $-SO_2-$ , 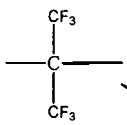 , 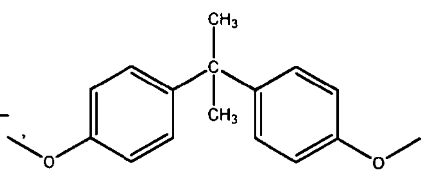 ,

—O—

et **en ce que** $R_4$ contient au moins un ou plusieurs des groupes fonctionnels $R_{4a}$, $R_{4b}$ ou $R_{4c}$ suivants

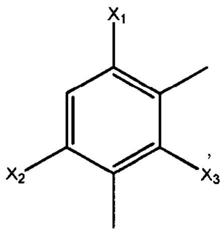

R4a

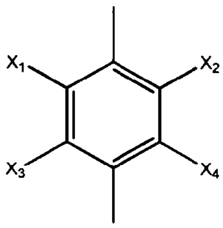

R4b

,

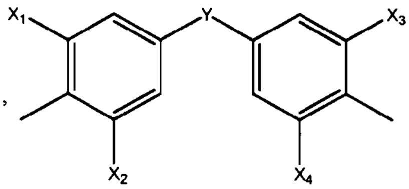

R4c

dans lesquels $X_1$, $X_2$, $X_3$ et $X_4$ représentent, soit H, soit $CH_3$, soit des radicaux alkyle en $C_2$ à $C_4$ et Y = $-CH_2-$, $-(CH_3)\ _2C-$, $SO_2$, $-(CF_3)_2C-$, -CO-, -COO-, -CONH-, -O-au moins un des radicaux $X_1$ à $X_4$, de préférence au moins deux des radicaux $X_1$ à $X_4$, de manière particulièrement préférée au moins trois des radicaux $X_1$ à $X_4$ et de manière tout particulièrement préférée tous les radicaux $X_1$ à $X_4$ représentant $CH_3$ ou un radical alkyle en $C_2$ à $C_4$ et les groupes fonctionnels $R_1$ à $R_4$ étant choisis de manière telle que les blocs A et B présentent une composition différente.

**2.** Copolyimide à blocs selon la revendication 1,
**caractérisé en ce que**
les longueurs de bloc n et m des blocs (A) et (B) sont chacune de 1 à 500, de préférence de 1 à 200, de manière particulièrement préférée de 5 à 150, en particulier de préférence de 10 à 100, de manière tout particulièrement préférée de 10 à 50 et le plus préférablement de 10 à 40
et/ou
**en ce que** le poids moléculaire $M_n$ du copolyimide à blocs selon l'invention (par rapport au standard polystyrène) se situe dans la plage de 10.000 à 200.0000 g/mole, de préférence dans la plage de 20.000 à 150.000 g/mole, de manière particulièrement préférée dans la plage de 20.000 à 120.000 g/mole et de manière tout particulièrement préférée dans la plage de 30.000 à 100.000 g/mole
et/ou
**en ce que** le poids moléculaire $M_w$ du copolyimide à blocs se situe dans la plage de 10.000 à 500.000 g/mole, de préférence de 50.000 à 300.000 g/mole et de manière particulièrement préférée de 80.000 à 200.000 g/mole
et/ou
**en ce que** l'indice de polydispersité se situe dans la plage de 1 à 10, de préférence dans la plage de 1 à 5, de manière particulièrement préférée dans la plage de 1 à 4, de manière tout particulièrement préférée dans la plage de 1,5 à 3,5 et en particulier de préférence dans la plage de 1,5 à 3.

**3.** Copolyimide à blocs selon la revendication 1 ou 2, **caractérisé en ce que** le bloc (B), sous forme isolée, est soluble dans un solvant aprotique dipolaire.

**4.** Copolyimide à blocs selon l'une quelconque des revendications 1 à 3, **caractérisé en ce que**
$R_1$ est constitué, au total de > 50% en mole, de préférence de ≥ 70% en mole, de manière particulièrement préférée de ≥ 80% en mole, de manière tout particulièrement préférée de 90 à 100% en mole, en particulier de préférence de 95 à 100% en mole et de manière tout particulièrement préférée de 100% en mole, par les groupes $R_{1a}$ et $R_{1b}$, ainsi que le cas échéant par d'autres groupes tétravalents, aromatiques, fonctionnels,
et/ou
**en ce que** $R_2$ est constitué, au total de > 50% en mole, de préférence de ≥ 70% en mole, de manière particulièrement préférée de ≥ 80% en mole, de manière tout particulièrement préférée de 90 à 100% en mole, en particulier de préférence de 95 à 100% en mole et de manière tout particulièrement préférée de 100% en mole, par les groupes $R_{2a}$ et $R_{2b}$ et/ou $R_{2c}$ ainsi que le cas échéant par d'autres groupes divalents, aromatiques, fonctionnels, de préférence des groupes aromatiques divalents substitués en position ortho par un groupe $C_1$-$C_4$-alkyle, de préférence par $CH_4$,
et/ou
**en ce que** $R_3$ est constitué, au total de > 50% en mole, de préférence de ≥ 60% en mole, de manière particulièrement préférée de ≥ 70% en mole, de manière tout particulièrement préférée de 80 à 100% en mole, en particulier de préférence de 90 à 100% en mole et de manière tout particulièrement préférée de 100% en mole, par les groupes $R_{3a}$, $R_{3b}$ et/ou $R_{3c}$ ainsi que le cas échéant par d'autres groupes tétravalents, aromatiques, fonctionnels,
et/ou
**en ce que** $R_4$ est constitué, à au total de > 50% en mole, de préférence de ≥ 65% en mole, de manière particulièrement préférée de ≥ 80% en mole, de manière tout particulièrement préférée de 90 à 100% en mole, en particulier de préférence de 95 à 100% en mole et de manière tout particulièrement préférée de 100% en mole, par les groupes

$R_{4a}$, $R_{4b}$ et/ou $R_{4c}$ ainsi que le cas échéant par d'autres groupes divalents, aromatiques, fonctionnels, de préférence des groupes aromatiques divalents substitués en position ortho par un groupe $C_1$-$C_4$-alkyle, de préférence par $CH_4$.

**5.** Copolyimide à blocs selon la revendication 4, **caractérisé en ce que**
$R_1$ est constitué par 0 à 100% en mole de $R_{1a}$ et par 0 à 100% en mole de $R_{1b}$, de préférence par 0 à 80% en mole de $R_{1a}$ et par 100 à 20% en mole de $R_{1b}$, de manière particulièrement préférée par 0 à 40% en mole $R_{1a}$ et par 100 à 60% en mole $R_{1b}$ et de manière tout particulièrement préférée par $0 \leq R_{1a} \leq 50\%$ en mole et $100 \geq R_{1b} \geq 50\%$ en mole, les pourcentages en mole des groupes fonctionnels $R_{1a}$ et $R_{1b}$ dans les plages mentionnées étant à chaque fois choisis de manière telle qu'ils entraînent au total 100% en mole de groupes fonctionnels $R_1$
et/ou
**en ce que** $R_2$ est constitué par 0 à 100% en mole de $R_{2a}$ et/ou par 0 à 100% en mole de $R_{2b}$ et/ou par 0 à 100% en mole de $R_{2c}$, de préférence par 40 à 100% en mole de $R_{2a}$ et par 0 à 60% en mole de $R_{2b}$ et par 0 à 60% en mole de $R_{2c}$, de manière particulièrement préférée par 50 à 90% en mole de $R_{2a}$ et par 10 à 50% en mole de $R_{2b}$ et par 0 à 40% en mole de $R_{2c}$, les pourcentages en mole des groupes fonctionnels $R_{2a}$, $R_{2b}$ et $R_2$, dans les plages mentionnées étant à chaque fois choisis de manière telle qu'ils entraînent au total 100% en mole des groupes fonctionnels $R_2$
et/ou
**en ce que** $R_3$ est constitué par 0 à 100% en mole de $R_{3a}$ et/ou par 0 à 100% en mole de $R_{3b}$ et/ou par 0 à 100% en mole de $R_{3c}$, de manière tout particulièrement préférée par 30 à 100% en mole de $R_{3a}$ et/ou par 0 à 40% en mole de $R_{3b}$ et par 30 à 100% en mole de $R_{3c}$ ou en particulier de préférence par 0 à 75% en mole de $R_{3a}$ et/ou par 0 à 75% en mole de $R_{3b}$ et par 25 à 100% en mole de $R_{3c}$, de manière tout particulièrement préférée par 0 à 60% en mole de $R_{3a}$ et par 0 à 15% en mole de $R_{3b}$ et par 100 à 25% en mole de $R_{3c}$ et le plus préférablement par 25 à 75% en mole de $R_{3a}$ et par 75 à 25% en mole de $R_{3c}$, les pourcentages en mole des groupes fonctionnels $R_{3a}$, $R_{3b}$ et $R_{3c}$ dans les plages mentionnées étant à chaque fois choisis de manière telle qu'ils entraînent au total 100% en mole du groupe fonctionnel $R_3$
et/ou
**en ce que** $R_4$ est constitué par 0 à 100% en mole de $R_{4a}$ et par 0 à 100% en mole de $R_{4b}$ et par 0 à 100% en mole de $R_{4c}$, les pourcentages en mole des groupes fonctionnels $R_{4a}$, $R_{4b}$ et $R_{4c}$ dans les plages mentionnées étant à chaque fois choisis de manière telle qu'ils entraînent au total 100% en mole des groupes fonctionnels $R_4$, de manière tout particulièrement préférée 100% en mole de $R_{4a}$ ou 100% en mole de $R_{4c}$, en particulier de préférence 100% en mole de $R_{4a}$ avec $X_1$, $X_2$ et $X_3$=$CH_4$ ou $R_4$ est constitué par un mélange d'au moins deux des groupes fonctionnels $R_{4a}$, $R_{4b}$ ou $R_{4c}$, le mélange étant de préférence constitué de 30 à 99% en mole, plus préférablement de 40 à 90% en mole et le plus préférablement de 50 à 80% en mole par $R_{4a}$ et le reste jusqu'à 100% en mole de $R_4$ étant constitué dans ces cas par $R_{4b}$ et/ou $R_{4c}$.

**6.** Copolyimide à blocs selon l'une quelconque des revendications 1 à 5, **caractérisé en ce qu'**il présente les compositions suivantes :

le bloc (A) est constitué par :

100% en mole de $R_{1b}$ ainsi que 64% en mole de $R_{2a}$, 16% en mole de $R_{2b}$ et 20% en mole de $R_{2c}$, ou
40% en mole de $R_{1a}$, 60% en mole de $R_{1b}$ ainsi que 80% en mole de $R_{2a}$ et 20% en mole de $R_{2b}$,
et le bloc (B) est constitué par
40 à 60% en mole de $R_{3a}$, 0 à 10% en mole de $R_{3b}$, 60 à 30% en mole de $R_{3c}$ ainsi que 90 à 100% en mole de $R_{4a}$, 0 à 10% en mole de $R_{4b}$ et 0 à 10% en mole de $R_{4c}$, ou
50% en mole de $R_{3a}$, 50% en mole de $R_{3c}$ ainsi que 100% en mole $R_{4a}$,
les pourcentages en mole indiqués se rapportant aux groupes fonctionnels $R_1$, $R_2$, $R_3$ et $R_4$ de manière telle que les quantités des différentes unités sont à chaque fois choisies de manière telle qu'on obtient, pour ces groupes, à chaque fois au total 100% en mole.

**7.** Procédé pour la préparation d'un copolyimide à blocs selon l'une quelconque des revendications 1 à 6, **caractérisé en ce que**

a. on prépare un oligo-imide présentant des anhydrides en position d'extrémité à partir d'au moins un dianhydride de formule (II)

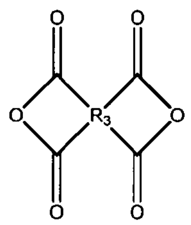

(II)

et d'au moins une diamine de formule (III)

$H_2N\text{-}R_4\text{-}NH_2$ (III)

$R_3$ et $R_4$ étant définis comme dans la revendication 1, et
b. on fait réagir l'oligo-imide ou le polyimide de l'étape a) avec au moins un dianhydride de formule (IV)

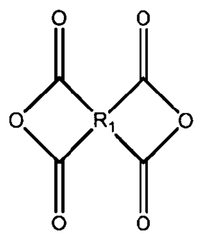

(IV)

et au moins un diisocyanate (V)

$OCN\text{-}R_2\text{-}NCO$ (V)

$R_1$ et $R_2$ étant définis comme dans la revendication 1, en un copolyimide à blocs et un catalyseur étant de préférence utilisé dans l'étape b).

**8.** Procédé selon la revendication 7, **caractérisé en ce que** l'étape a) comprend les étapes partielles suivantes :

a1) préparation d'un acide oligoamidique à partir d'au moins une diamine selon la formule (III) et d'au moins un anhydride d'acide dicarboxylique selon la formule (II) dans un solvant aprotique dipolaire, l'anhydride d'acide dicarboxylique se trouvant en un excès molaire
a2) imidation de l'acide oligoamidique,
a3) précipitation de l'oligo-imide de l'étape a2)
a4) lavage, de préférence avec de l'eau
a5) séchage, de préférence à 30 jusqu'à 200°C, de préférence à 70 jusqu'à 150°C et/ou conditionnement, de préférence à 200 jusqu'à 400°C, de manière particulièrement préférée à 200 jusqu'à 300°C.

**9.** Procédé selon la revendication 8, **caractérisé en ce que** l'imidation dans l'étape a2) a lieu par voie thermique ou chimique, l'imidation chimique ayant lieu par addition d'une base et d'un agent soutirant l'eau, la base étant ajoutée de manière particulièrement préférée uniquement en une quantité catalytique.

**10.** Procédé selon l'une quelconque des revendications 7 à 9, **caractérisé en ce qu'**on utilise, comme catalyseur basique, des amines organiques tertiaires et/ou des sels basiques, de manière particulièrement préférée KOH, NaOH ou méthanolate de sodium.

**11.** Procédé selon l'une quelconque des revendications 7 à 10, **caractérisé en ce que** l'étape b) comprend les étapes partielles suivantes :

b1) une solution de l'oligo-imide de l'étape a. est préparée ensemble avec du PMDA et /ou avec du BTDA et avec un catalyseur basique dans un solvant aprotique dipolaire et
b2) par addition, de préférence continue, d'au moins un diisocyanate ou d'un mélange de plusieurs diisocyanates, choisis dans le groupe constitué par 2,4-TDI, 2,6-TDI et 4,4'-MDI, un copolymère à blocs est formé.

**12.** Procédé pour la préparation d'un copolyimide à blocs selon l'une quelconque des revendications 1 à 6, **caractérisé en ce que**

(i) on prépare un oligo-imide présentant des anhydrides en position d'extrémité à partir d'au moins un dianhydride de formule (IV)

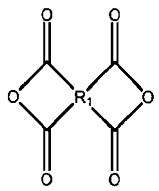

(IV)

et d'au moins un diisocyanate de formule (V)

$$OCN\text{-}R_2\text{-}NCO \qquad (V)$$

$R_1$ et $R_2$ étant définis comme dans la revendication 1, et

(ii) on prépare un copolymère à blocs polyimide/poly(acide amidique) par réaction du bloc (A) obtenu à partir de l'étape (i) avec au moins un dianhydride de formule (II)

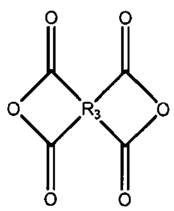

(II)

$R_3$ étant défini comme décrit ci-dessus, et avec au moins une diamine de formule (III)

$$H_2N\text{-}R_4\text{-}NH_2 \qquad (III),$$

$R_3$ et $R_4$ étant définis comme dans la revendication 1 et/ou avec un bloc (B) présentant des groupes amino en position d'extrémité, préparé à partir d'au moins un dianhydride de formule (II) et d'au moins une diamine de formule (III) et

(iii) le copolymère de polyimide/poly(acide amidique) formé après l'étape iii) est imidé chimiquement de préférence avec de la pyridine et de l'acétanhydride.

**13.** Membrane en fibres creuses, intégrale, asymétrique ou membrane plane intégrale, asymétrique, préparée à partir d'un copolyimide à blocs selon l'une quelconque des revendications 1 à 6, de préférence directement à partir de la solution de polymère obtenue pendant la préparation du copolyimide à blocs selon l'une quelconque des revendications 1 à 5, c'est-à-dire sans isolement intermédiaire du copolyimide à blocs sous forme de poudre.

**14.** Module à membrane en fibres creuses comprenant une membrane en fibres creuses intégrale asymétrique selon la revendication 13 ou éléments enroulés en spirale comprenant une intégrale asymétrique selon la revendication 13.

**15.** Procédé pour la séparation de gaz, **caractérisé en ce qu'**une membrane en fibres creuses intégrale asymétrique ou une membrane plane intégrale asymétrique selon la revendication 13 ou un module à membrane en fibres creuses et/ou un élément enroulé en spirale selon la revendication 14 est utilisé pour la séparation du mélange gazeux.

**16.** Dispositif pour la séparation de gaz comprenant une membrane en fibres creuses intégrale asymétrique ou une membrane plane intégrale asymétrique selon la revendication 13 ou un module à membrane en fibres creuses et/ou un élément enroulé en spirale selon la revendication 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011009919 A
- US 20100313752 A
- US 5202411 A
- US 5094919 A
- US 5130017 A
- US 6252038 B
- JP 6071148 A
- WO 2007009652 A
- WO 2011009919 A1


### In der Beschreibung aufgeführte Nicht-Patentliteratur


- **M. NIWA et al.** *J. of Appl. Pol. Science,* 2006, vol. 100, 2436-2442
- *CHEMICAL ABSTRACTS,* 38103-06-9